# EUROPEAN PATENT APPLICATION

(11) **EP 4 851 757 A1**
(43) Date of publication of application: **09.12.2026**
(21) Application number: 26183101.0
(22) Date of filing: 04.06.2026
(51) Int. Cl.: G06F 3/01, G06F 3/04815

(54) **SYSTEMS AND METHODS FOR DETERMINING PLACEMENTS OF VIRTUAL CONTENT OF A MULTI-USER COMMUNICATION SESSION IN RESPONSE TO DETECTING AN EVENT FOR RESETTING THE PLACEMENTS**

(30) Priority: 08.06.2025 US 202563819876 P; 02.06.2026 US 202619695862
(71) Applicant: Apple Inc., Cupertino, CA 95014 (US)
(72) Inventor: RODRIGUEZ, Alexander Burling, Cupertino, 95014 (US); LEE, Kevin, Cupertino, 95014 (US)
(74) Representative: COPA Copenhagen Patents

(57) **Abstract**

Systems and methods for determining placement locations in a three-dimensional environment for virtual content of a multi-user communication session that includes a group of collocated users and one or more non-collocated users in response to detecting an event corresponding to a request to reset a spatial arrangement of the virtual content of the multi-user communication session are disclosed. In some examples of the disclosure, the request is initiated based on user input detected at an electronic device associated with a non-collocated user. In some examples of the disclosure, the request is initiated based on user input detected at an electronic device associated with a collocated user.

## Description

### Cross-Reference to Related Applications

This application claims benefit of U.S. Provisional Application No. 63/819,876, filed June 8, 2025, and U.S. Patent Application No. 19/695,862, filed June 2, 2026, the contents of which are herein incorporated by reference in their entireties for all purposes.

### Field of the Disclosure

This relates generally to systems and methods of determining placements for virtual content in a multi-user communication session that includes collocated electronic devices and one or more non-collocated electronic devices, and more particularly, to determining the placements for virtual content of a multi-user communication session in a three-dimensional environment that includes the collocated electronic devices in response to detecting an event.

### Background of the Disclosure

Some computer graphical environments provide two-dimensional (2D) and/or three-dimensional (3D) environments where at least some objects displayed for a user's viewing are virtual and generated by a computer. In certain instances, the three-dimensional environments are presented by multiple devices communicating in a multi-user communication session. In certain instances, an avatar (e.g., a representation) of each non-collocated user participating in the multi-user communication session (e.g., via the computing devices) is displayed in the three-dimensional environment of the multi-user communication session. In certain instances, content can be shared in the three-dimensional environment for viewing and interaction by multiple users participating in the multi-user communication session.

### Summary of the Disclosure

Some examples of the disclosure are directed to systems and methods for determining placement locations in a three-dimensional environment for virtual content of a multi-user communication session that includes a group of collocated users and one or more non-collocated users in response to detecting an event corresponding to a request to reset a spatial arrangement of the virtual content of the multi-user communication session. In some examples, the request is initiated based on user input detected at an electronic device associated with a non-collocated user. In some examples, the request is initiated based on user input detected at an electronic device associated with a collocated user. The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.

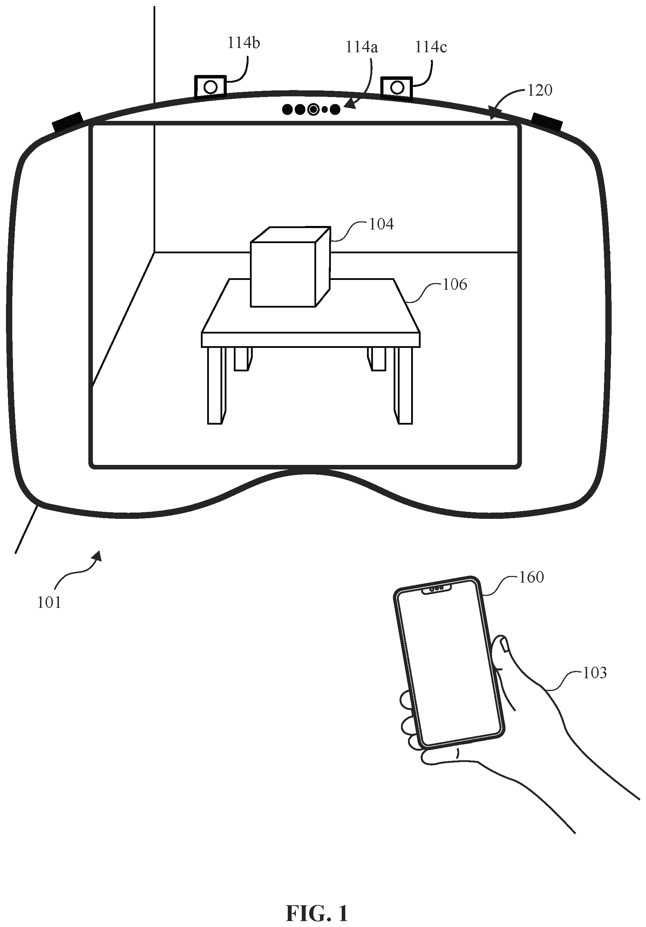

FIG. 1 illustrates an electronic device presenting a three-dimensional environment, according to some examples of the disclosure.

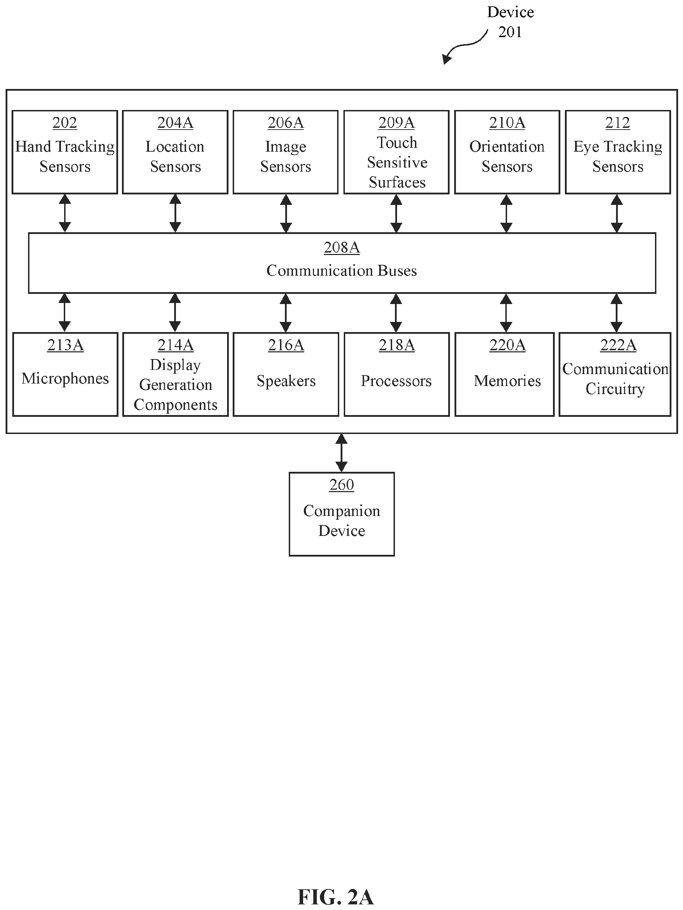

FIGs. 2A-2C illustrate block diagrams of example architectures for electronic devices or systems, according to some examples of the disclosure.

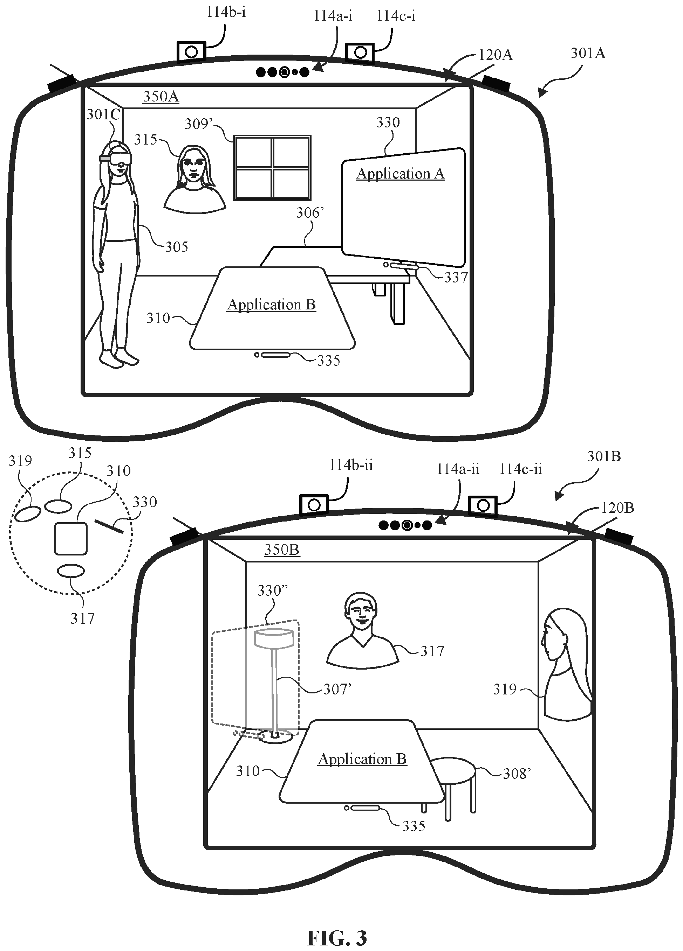

FIG. 3 illustrates an example of a spatial group in a multi-user communication session that includes a plurality of electronic devices, according to some examples of the disclosure.

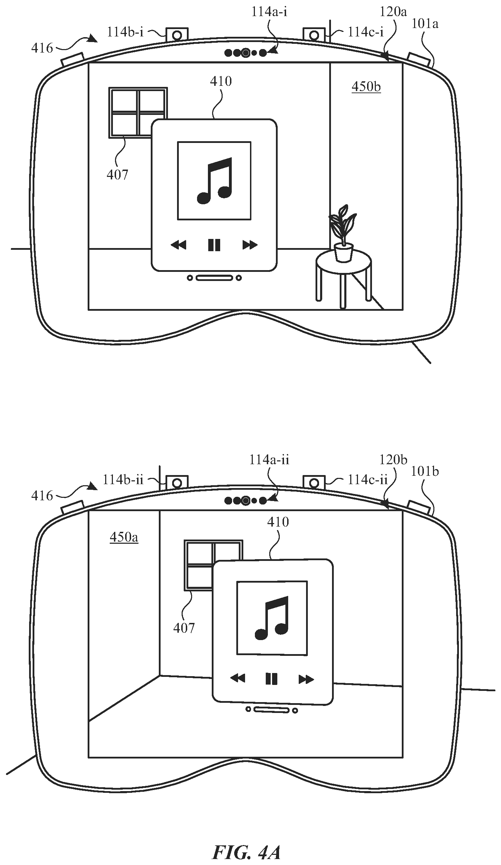

FIGs. 4A through 4W generally illustrate a first electronic device detecting and responding to events that correspond to requests to reset a spatial arrangement of virtual content of the multi-user communication session, where the multi-user communication session includes a first user of the first electronic device and a second user of a second electronic device, who are collocated in a physical environment, and includes one or more users of electronic devices who are non-collocated in the physical environment, according to some examples of the disclosure.

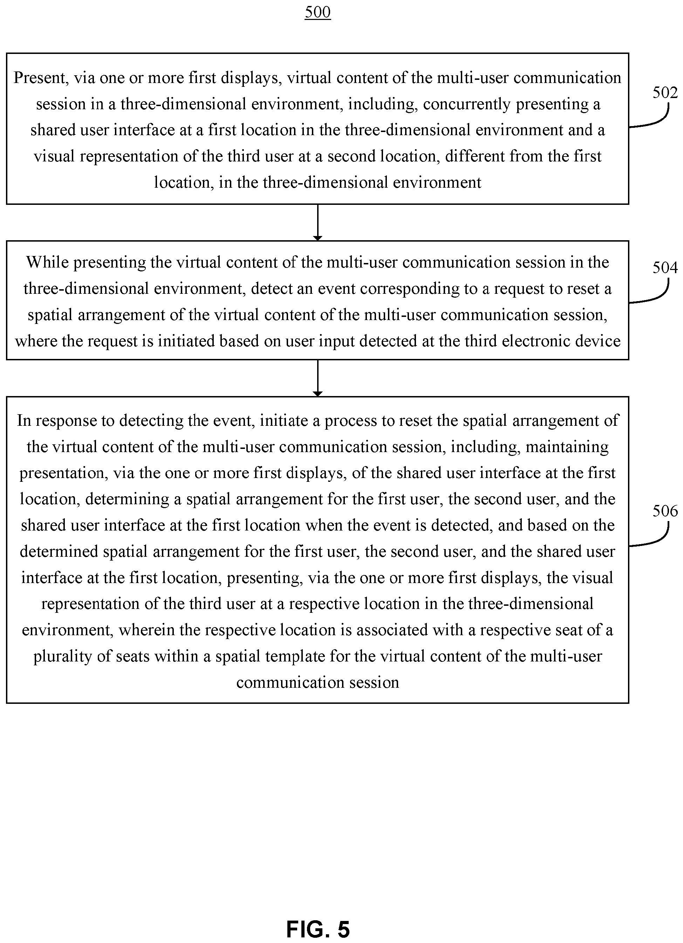

FIG. 5 illustrates a flow diagram illustrating an example process for determining placement locations in a three-dimensional environment for virtual content of a multi-user communication session that includes a group of collocated users and one or more non-collocated users in response to detecting an event corresponding to a request to reset a spatial arrangement of the virtual content of the multi-user communication session, where the event is based on user input detected at an electronic device of a non-collocated user, according to some examples of the disclosure.

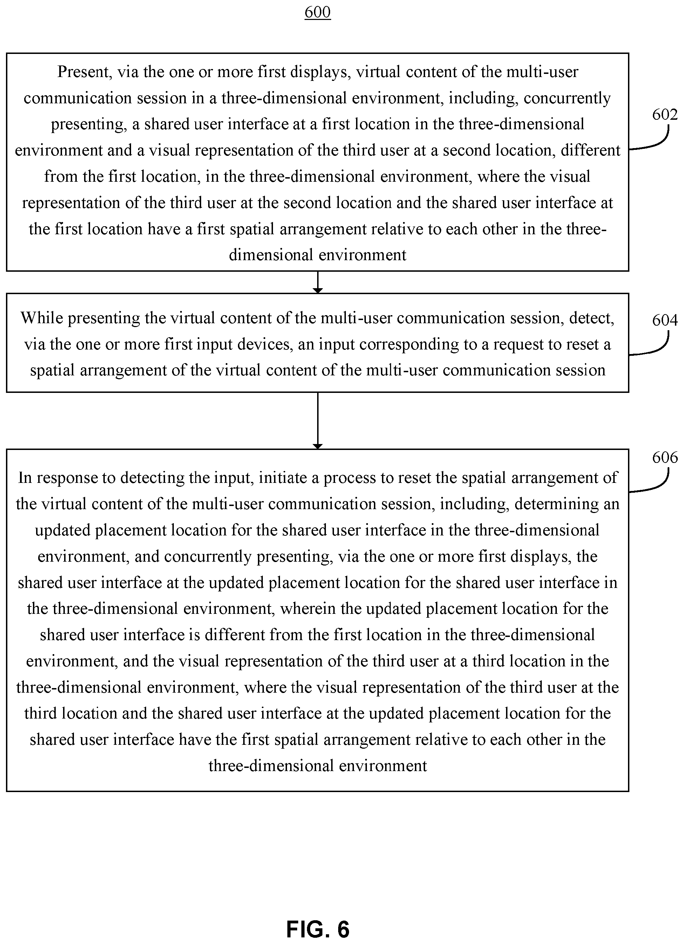

FIG. 6 illustrates a flow diagram illustrating an example process for determining placement locations in a three-dimensional environment for virtual content of a multi-user communication session that includes a group of collocated users and one or more non-collocated users in response to detecting an event corresponding to a request to reset a spatial arrangement of the virtual content of the multi-user communication session, where the event is based on user input detected at an electronic device of a collocated user, according to some examples of the disclosure.

### Detailed Description

Some examples of the disclosure are directed to systems and methods for determining placement locations in a three-dimensional environment for virtual content of a multi-user communication session that includes a group of collocated users and one or more non-collocated users in response to detecting an event corresponding to a request to reset a spatial arrangement of the virtual content of the multi-user communication session. In some examples, the request is initiated based on user input detected at an electronic device associated with non-collocated user. In some examples, the request is initiated based on user input detected at an electronic device associated with a collocated user.

In some examples, a spatial group or state in the multi-user communication session denotes a spatial arrangement or template that dictates locations of users and content that are located in or otherwise associated with the spatial group. In some examples, users in the same spatial group within the multi-user communication session experience spatial truth according to the spatial arrangement of the spatial group. In some examples, when the user of the first electronic device is in a first spatial group and the user of the second electronic device is in a second spatial group in the multi-user communication session, the users experience spatial truth that is localized to their respective spatial groups. In some examples, while the user of the first electronic device and the user of the second electronic device are grouped into separate spatial groups or states within the multi-user communication session, if the first electronic device and the second electronic device return to the same operating state, the user of the first electronic device and the user of the second electronic device are regrouped into the same spatial group within the multi-user communication session.

As used herein, a hybrid spatial group corresponds to a group or number of participants (e.g., users) in a multi-user communication session in which at least a subset of the participants is non-collocated in a physical environment. For example, as described via one or more examples in this disclosure, a hybrid spatial group includes at least two participants who are collocated in a first physical environment and at least one participant who is non-collocated with the at least two participants in the first physical environment (e.g., the at least one participant is located in a second physical environment, different from the first physical environment). In some examples, a hybrid spatial group in the multi-user communication session has a spatial arrangement that dictates locations of users and content that are located in the spatial group. In some examples, users in the same hybrid spatial group within the multi-user communication session experience spatial truth according to the spatial arrangement of the spatial group, as similarly discussed above. It should be understood that the term "and/or" as used herein refers to and encompasses any and all possible combinations of one or more of the associated listed items (e.g., "A and/or B" refers to "A and B" and, optionally, "A or B").

FIG. 1 illustrates an electronic device 101 presenting a three-dimensional environment (e.g., an extended reality (XR) environment or a computer-generated reality (CGR) environment, optionally including representations of physical and/or virtual objects), according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2A. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of the physical environment including table 106 (illustrated in the field of view of electronic device 101).

In some examples, as shown in FIG. 1, electronic device 101 includes one or more internal image sensors 114a oriented towards a face of the user (e.g., eye tracking cameras as described below with reference to FIGs. 2A-2B). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user. In some examples, the field of view visible to the user is the same as a field of view of external image sensors 114b and 114c. For example, when display 120 is optionally part of a head-mounted device, the field of view of display 120 is optionally the same as or similar to the field of view of the user's eyes. In some examples, the field of view visible to the user is different from a field of view of external image sensors 114b and 114c (e.g., narrower than the field of view of external image sensors 114b and 114c). In other examples, the field of view of display 120 may be smaller than the field of view of the user's eyes. A viewpoint of a user determines what content is visible in the field of view. A viewpoint generally specifies a location and a direction relative to the three-dimensional environment. As the viewpoint of a user shifts, the field of view of the three-dimensional environment will also shift accordingly. In some examples, electronic device 101 may be an optical see-through device in which display 120 is a transparent or translucent display through which portions of the physical environment may be directly viewed. In some examples, display 120 may be included within a transparent lens and may overlap all or a portion of the transparent lens. In other examples, electronic device may be a video-passthrough device in which display 120 is an opaque display configured to display images of the physical environment using images captured by external image sensors 114b and 114c. While a single display is shown in FIG. 1, it is understood that display 120 optionally includes more than one display. For example, display 120 optionally includes a stereo pair of displays (e.g., left and right display panels for the left and right eyes of the user, respectively) having displayed outputs that are merged (e.g., by the user's brain) to create the view of the content shown in FIG. 1. In some examples, as discussed in more detail below with reference to FIGs. 2A-2B, the display 120 includes or corresponds to a transparent or translucent surface (e.g., a lens) that is not equipped with display capability (e.g., and is therefore unable to generate and display the virtual object 104) and alternatively presents a direct view of the physical environment in the user's field of view (e.g., the field of view of the user's eyes).

In some examples, the electronic device 101 is configured to display (e.g., in response to a trigger) a virtual object 104 in the three-dimensional environment. Virtual object 104 is represented by a cube illustrated in FIG. 1, which is not present in the physical environment, but is displayed in the three-dimensional environment positioned on the top of table 106 (e.g., real-world table or a representation thereof). Optionally, virtual object 104 is displayed on the surface of the table 106 in the three-dimensional environment displayed via the display 120 of the electronic device 101 in response to detecting the planar surface of table 106 in the physical environment 100.

It is understood that virtual object 104 is a representative virtual object and one or more different virtual objects (e.g., of various dimensionality such as two-dimensional or other three-dimensional virtual objects) can be included and rendered in a three-dimensional environment. For example, the virtual object can represent an application or a user interface displayed in the three-dimensional environment. In some examples, the virtual object can represent content corresponding to the application and/or displayed via the user interface in the three-dimensional environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

As discussed herein, one or more air pinch gestures performed by a user (e.g., with hand 103 in FIG. 1) are detected by one or more input devices of electronic device 101 and interpreted as one or more user inputs directed to content displayed by electronic device 101. Additionally or alternatively, in some examples, the one or more user inputs interpreted by the electronic device 101 as being directed to content displayed by electronic device 101 (e.g., the virtual object 104) are detected via one or more hardware input devices (e.g., controllers, touch pads, proximity sensors, buttons, sliders, knobs, etc.) rather than via the one or more input devices that are configured to detect air gestures, such as the one or more air pinch gestures, performed by the user. Such depiction is intended to be exemplary rather than limiting; the user optionally provides user inputs using different air gestures and/or using other forms of input.

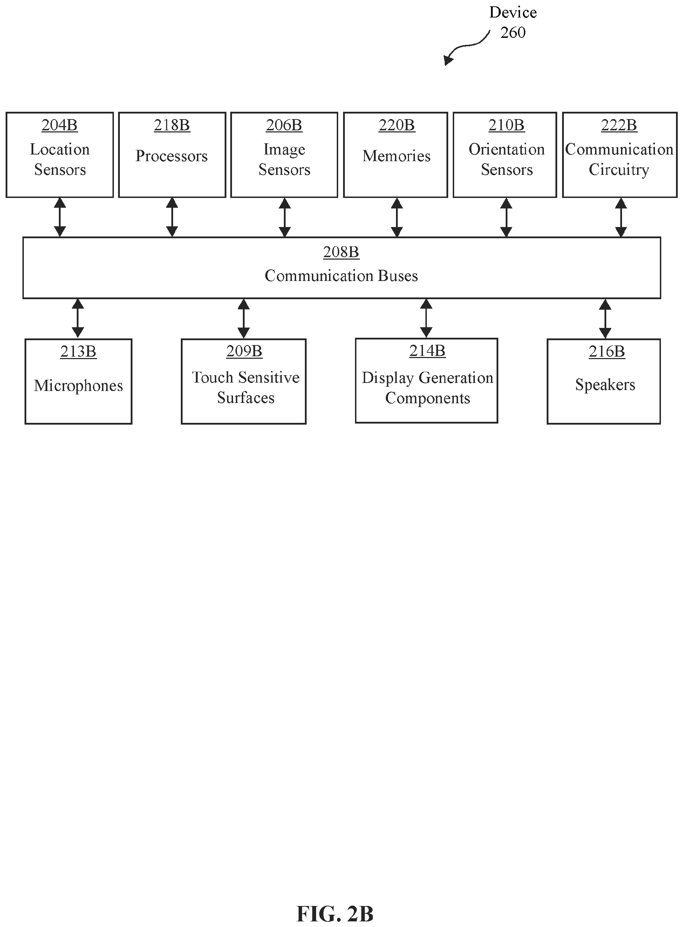

In some examples, the electronic device 101 may be configured to communicate with a second electronic device, such as a companion device. For example, as illustrated in FIG. 1, the electronic device 101 is optionally in communication with electronic device 160. In some examples, electronic device 160 corresponds to a mobile electronic device, such as a smartphone, a tablet computer, a smart watch, a laptop computer, or other electronic device. In some examples, electronic device 160 corresponds to a non-mobile electronic device, which is generally stationary and not easily moved within the physical environment (e.g., desktop computer, server, etc.). Additional examples of electronic device 160 are described below with reference to the architecture block diagram of FIG. 2B. In some examples, the electronic device 101 and the electronic device 160 are associated with a same user. For example, in FIG. 1, the electronic device 101 may be positioned on (e.g., mounted to) a head of a user and the electronic device 160 may be positioned near electronic device 101, such as in a hand 103 of the user (e.g., the hand 103 is holding the electronic device 160), a pocket or bag of the user, or a surface near the user. The electronic device 101 and the electronic device 160 are optionally associated with a same user account of the user (e.g., the user is logged into the user account on the electronic device 101 and the electronic device 160). Additional details regarding the communication between the electronic device 101 and the electronic device 160 are provided below with reference to FIGs. 2A-2C.

In some examples, displaying an object in a three-dimensional environment is caused by or enables interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the descriptions that follows, an electronic device that is in communication with one or more displays and one or more input devices is described. It is understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it is understood that the described electronic device, display and touch-sensitive surface are optionally distributed between two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIGs. 2A-2C illustrate block diagrams of example architectures for electronic devices or systems according to some examples of the disclosure. In some examples, electronic device 201 and/or electronic device 260 include one or more electronic devices. For example, the electronic device 201 may be a portable device, an auxiliary device in communication with another device, a head-mounted display, a head-worn speaker, etc., respectively. In some examples, electronic device 201 corresponds to electronic device 101 described above with reference to FIG. 1. In some examples, electronic device 260 corresponds to electronic device 160 described above with reference to FIG. 1.

As illustrated in FIG. 2A, the electronic device 201 optionally includes one or more sensors, such as one or more hand tracking sensors 202, one or more location sensors 204A, one or more image sensors 206A (optionally corresponding to internal image sensors 114a and/or external image sensors 114b and 114c in FIG. 1), one or more touch-sensitive surfaces 209A, one or more motion and/or orientation sensors 210A, one or more eye tracking sensors 212, one or more microphones 213A or other audio sensors, one or more body tracking sensors (e.g., torso and/or head tracking sensors), etc. The electronic device 201 optionally includes one or more output devices, such as one or more display generation components 214A, optionally corresponding to display 120 in FIG. 1, one or more speakers 216A, one or more haptic output devices (not shown), etc. The electronic device 201 optionally includes one or more processors 218A, one or more memories 220A, and/or communication circuitry 222A. One or more communication buses 208A are optionally used for communication between the above-mentioned components of electronic device 201.

Additionally, the electronic device 260 optionally includes the same or similar components as the electronic device 201. For example, as shown in FIG. 2B, the electronic device 260 optionally includes one or more location sensors 204B, one or more image sensors 206B, one or more touch-sensitive surfaces 209B, one or more orientation sensors 210B, one or more microphones 213B, one or more display generation components 214B, one or more speakers 216B, one or more processors 218B, one or more memories 220B, and/or communication circuitry 222B. One or more communication buses 208B are optionally used for communication between the above-mentioned components of electronic device 260.

The electronic devices 201 and 260 are optionally configured to communicate via a wired or wireless connection (e.g., via communication circuitry 222A, 222B) between the two electronic devices. For example, as indicated in FIG. 2A, the electronic device 260 may function as a companion device to the electronic device 201. For example, in some examples, the electronic device 260 processes sensor inputs from electronic devices 201 and 260 and/or generates content for display using display generation components 214A of electronic device 201.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}, etc. In some examples, communication circuitry 222A, 222B includes or supports Wi-Fi (e.g., an 802.11 protocol), Ethernet, ultra-wideband ("UWB"), high frequency systems (e.g., 900 MHz, 2.4 GHz, and 5.6 GHz communication systems), or any other communications protocol, or any combination thereof.

One or more processors 218A, 218B include one or more general processors, one or more graphics processors, and/or one or more digital signal processors. In some examples, one or more processors 218A, 218B include one or more microprocessors, one or more central processing units, one or more application-specific integrated circuits, one or more field-programmable gate arrays, one or more programmable logic devices, or a combination of such devices. In some examples, memories 220A and/or 220B are a non-transitory computer-readable storage medium (e.g., flash memory, random access memory, or other volatile or non-volatile memory or storage) that stores computer-readable instructions configured to be executed by the one or more processors 218A, 218B to perform the techniques, processes, and/or methods described herein. In some examples, memories 220A and/or 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, one or more display generation components 214A, 214B include a single display (e.g., a liquid-crystal display (LCD), organic light-emitting diode (OLED), or other types of display). In some examples, the one or more display generation components 214A, 214B include multiple displays. In some examples, the one or more display generation components 214A, 214B can include a display with touch capability (e.g., a touch screen), a projector, a holographic projector, a retinal projector, a transparent or translucent display, etc. In some examples, the electronic device does not include one or more display generation components 214A or 214B. For example, instead of the one or more display generation components 214A or 214B, some electronic devices include transparent or translucent lenses or other surfaces that are not configured to display or present virtual content. However, it should be understood that, in such instances, the electronic device 201 and/or the electronic device 260 are optionally equipped with one or more of the other components illustrated in FIGs. 2A and 2B and described herein, such as the one or more hand tracking sensors 202, one or more eye tracking sensors 212, one or more image sensors 206A, and/or the one or more motion and/or orientations sensors 210A. Alternatively, in some examples, the one or more display generation components 214A or 214B are provided separately from the electronic devices 201 and/or 260. For example, the one or more display generation components 214A, 214B are in communication with the electronic device 201 (and/or electronic device 260), but are not integrated with the electronic device 201 and/or electronic device 260 (e.g., within a housing of the electronic devices 201, 260). In some examples, electronic devices 201 and 260 include one or more touch-sensitive surfaces 209A and 209B, respectively, for receiving user inputs, such as tap inputs and swipe inputs or other gestures (e.g., hand-based or finger-based gestures). In some examples, the one or more display generation components 214A, 214B and the one or more touch-sensitive surfaces 209A, 209B form one or more touch-sensitive displays (e.g., a touch screen integrated with each of electronic devices 201 and 260 or external to each of electronic devices 201 and 260 that is in communication with each of electronic devices 201 and 260).

Electronic devices 201 and 260 optionally include one or more image sensors 206A and 206B, respectively. The one or more image sensors 206A, 206B optionally include one or more visible light image sensors, such as charged coupled device (CCD) sensors, and/or complementary metal-oxide-semiconductor (CMOS) sensors operable to obtain images of physical objects from the real-world environment. The one or more image sensors 206A, 206B also optionally include one or more infrared (IR) sensors, such as a passive or an active IR sensor, for detecting infrared light from the real-world environment. For example, an active IR sensor includes an IR emitter for emitting infrared light into the real-world environment. The one or more image sensors 206A, 206B also optionally include one or more cameras configured to capture movement of physical objects in the real-world environment. The one or more image sensors 206A, 206B also optionally include one or more depth sensors configured to detect the distance of physical objects from electronic device 201, 260. In some examples, information from one or more depth sensors can allow the device to identify and differentiate objects in the real-world environment from other objects in the real-world environment. In some examples, one or more depth sensors can allow the device to determine the texture and/or topography of objects in the real-world environment. In some examples, the one or more image sensors 206A or 206B are included in an electronic device different from the electronic devices 201 and/or 260. For example, the one or more image sensors 206A, 206B are in communication with the electronic device 201, 260, but are not integrated with the electronic device 201, 260 (e.g., within a housing of the electronic device 201, 260). Particularly, in some examples, the one or more cameras of the one or more image sensors 206A, 206B are integrated with and/or coupled to one or more separate devices from the electronic devices 201 and/or 260 (e.g., but are in communication with the electronic devices 201 and/or 260), such as one or more input and/or output devices (e.g., one or more speakers and/or one or more microphones, such as earphones or headphones) that include the one or more image sensors 206A, 206B. In some examples, electronic device 201 or electronic device 260 corresponds to a head-worn speaker (e.g., headphones or earbuds). In such instances, the electronic device 201 or the electronic device 260 is equipped with a subset of the other components illustrated in FIGs. 2A and 2B and described herein. In some such examples, the electronic device 201 or the electronic device 260 is equipped with one or more image sensors 206A, 206B, the one or more motion and/or orientations sensors 210A, 210B, and/or speakers 216A, 216B.

In some examples, electronic device 201, 260 uses CCD sensors, event cameras, and depth sensors in combination to detect the physical environment around electronic device 201, 260. In some examples, the one or more image sensors 206A, 206B include a first image sensor and a second image sensor. The first image sensor and the second image sensor work in tandem and are optionally configured to capture different information of physical objects in the real-world environment. In some examples, the first image sensor is a visible light image sensor, and the second image sensor is a depth sensor. In some examples, electronic device 201, 260 uses the one or more image sensors 206A, 206B to detect the position and orientation of electronic device 201, 260 and/or the one or more display generation components 214A, 214B in the real-world environment. For example, electronic device 201, 260 uses the one or more image sensors 206A, 206B to track the position and orientation of the one or more display generation components 214A, 214B relative to one or more fixed objects in the real-world environment.

In some examples, electronic devices 201 and 260 include one or more microphones 213A and 213B, respectively, or other audio sensors. Electronic device 201, 260 optionally uses the one or more microphones 213A, 213B to detect sound from the user and/or the real-world environment of the user. In some examples, the one or more microphones 213A, 213B include an array of microphones (e.g., a plurality of microphones) that optionally operate in tandem, such as to identify ambient noise or to locate the source of sound in space of the real-world environment.

Electronic devices 201 and 260 include one or more location sensors 204A and 204B, respectively, for detecting a location of electronic device 201 and/or the one or more display generation components 214A and a location of electronic device 260 and/or the one or more display generation components 214B, respectively. For example, the one or more location sensors 204A, 204B can include a global positioning system (GPS) receiver that receives data from one or more satellites and allows electronic device 201, 260 to determine the absolute position of the electronic device in the physical world.

Electronic devices 201 and 260 include one or more orientation sensors 210A and 210B, respectively, for detecting orientation and/or movement of electronic device 201 and/or the one or more display generation components 214A and orientation and/or movement of electronic device 260 and/or the one or more display generation components 214B, respectively. For example, electronic device 201, 260 uses the one or more orientation sensors 210A, 210B to track changes in the position and/or orientation of electronic device 201, 260 and/or the one or more display generation components 214A, 214B, such as with respect to physical objects in the real-world environment. The one or more orientation sensors 210A, 210B optionally include one or more gyroscopes and/or one or more accelerometers.

Electronic device 201 includes one or more hand tracking sensors 202 and/or one or more eye tracking sensors 212, in some examples. It is understood, that although referred to as hand tracking or eye tracking sensors, that electronic device 201 additionally or alternatively optionally includes one or more other body tracking sensors, such as one or more leg, one or more torso and/or one or more head tracking sensors. The one or more hand tracking sensors 202 are configured to track the position and/or location of one or more portions of the user's hands, and/or motions of one or more portions of the user's hands with respect to the three-dimensional environment, relative to the one or more display generation components 214A, and/or relative to another defined coordinate system. The one or more eye tracking sensors 212 are configured to track the position and movement of a user's gaze (e.g., a user's attention, including eyes, face, or head, more generally) with respect to the real-world or three-dimensional environment and/or relative to the one or more display generation components 214A. In some examples, the one or more hand tracking sensors 202 and/or the one or more eye tracking sensors 212 are implemented together with the one or more display generation components 214A. In some examples, the one or more hand tracking sensors 202 and/or the one or more eye tracking sensors 212 are implemented separate from the one or more display generation components 214A. In some examples, electronic device 201 alternatively does not include the one or more hand tracking sensors 202 and/or the one or more eye tracking sensors 212. In some such examples, the one or more display generation components 214A may be utilized by the electronic device 260 to provide a three-dimensional environment and the electronic device 260 may utilize input and other data gathered via the other one or more sensors (e.g., the one or more location sensors 204A, the one or more image sensors 206A, the one or more touch-sensitive surfaces 209A, the one or more motion and/or orientation sensors 210A, and/or the one or more microphones 213A or other audio sensors) of the electronic device 201 as input and data that is processed by the one or more processors 218B of the electronic device 260. Additionally or alternatively, electronic device 260 optionally does not include other components shown in FIG. 2B, such as the one or more location sensors 204B, the one or more image sensors 206B, the one or more touch-sensitive surfaces 209B, etc. In some such examples, the one or more display generation components 214A may be utilized by the electronic device 260 to provide a three-dimensional environment and the electronic device 260 may utilize input and other data gathered via the one or more motion and/or orientation sensors 210A (and/or the one or more microphones 213A) of the electronic device 201 as input.

In some examples, the one or more hand tracking sensors 202 (and/or other body tracking sensors, such as leg, torso and/or head tracking sensors) can use the one or more image sensors 206 (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, the one or more image sensors 206A are positioned relative to the user to define a field of view of the one or more image sensors 206A and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, the one or more eye tracking sensors 212 include at least one eye tracking camera (e.g., IR cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic devices 201 and 260 are not limited to the components and configuration of FIGs. 2A-2B, but can include fewer, other, or additional components in multiple configurations. In some examples, electronic device 201 and/or electronic device 260 can each be implemented between multiple electronic devices (e.g., as a system). In some such examples, each of (or more of) the electronic devices may include one or more of the same components discussed above, such as various sensors, one or more display generation components, one or more speakers, one or more processors, one or more memories, and/or communication circuitry. A person or persons using electronic device 201 and/or electronic device 260, is optionally referred to herein as a user or users of the device.

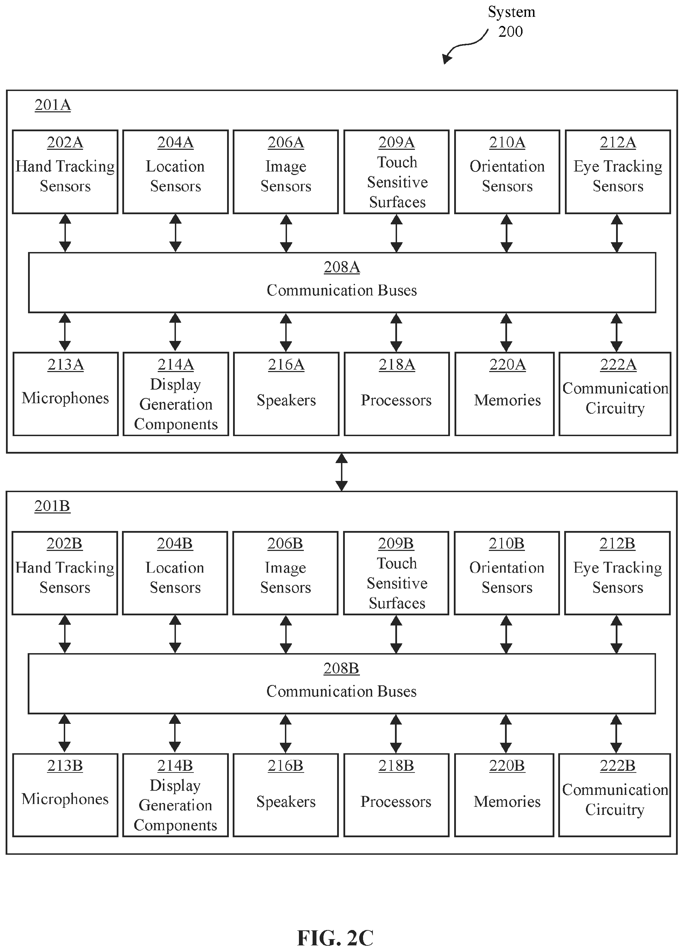

FIG. 2C illustrates a block diagram of an example architecture for a system 200 according to some examples of the disclosure. In some examples, system 200 includes multiple electronic devices. For example, in FIG. 2C, the system 200 includes a first electronic device 201A and a second electronic device 201B, wherein the first electronic device 201A and the second electronic device 201B are in communication with each other. In some examples, the first electronic device 201A and the second electronic device 201B correspond to and/or have one or more characteristics of the electronic device 201 described above with reference to FIG. 2A. In some examples, the first electronic device 201A and the second electronic device 201B correspond to electronic device 101 described above with reference to FIG. 1. For example, as shown in FIG. 2C, the first electronic device 201A optionally includes various sensors (e.g., the one or more hand tracking sensors 202A, the one or more location sensors 204A, the one or more image sensors 206A, the one or more touch-sensitive surfaces 209A, the one or more motion and/or orientation sensors 210A, the one or more eye tracking sensors 212A, the one or more microphones 213A or other audio sensors, the one or more body tracking sensors (e.g., torso and/or head tracking sensors), the one or more display generation components 214A, the one or more speakers 216A, the one or more processors 218A, the one or more memories 220A, and/or the communication circuitry 222A described above with reference to FIGs. 2A-2B. Similarly, in some examples, the second electronic device 201B optionally includes various sensors (e.g., one or more hand tracking sensors 202B, the one or more location sensors 204B, the one or more image sensors 206B, the one or more touch-sensitive surfaces 209B, the one or more motion and/or orientation sensors 210B, one or more eye tracking sensors 212B, the one or more microphones 213B or other audio sensors, one or more body tracking sensors (e.g., torso and/or head tracking sensors), the one or more display generation components 214B, one or more speakers 216B, the one or more processors 218B, the one or more memories 220B, and/or the communication circuitry 222B described above with reference to FIGs. 2A-2B. In some examples, the one or more hand tracking sensors 202B have one or more characteristics of the one or more hand tracking sensors 202A discussed above. In some examples, the one or more eye tracking sensors 212B have one or more characteristics of the one or more eye tracking sensors 212A. One or more communication buses 208A and 208B are optionally used for communication between the above-mentioned components of first electronic device 201A and second electronic device 201B, respectively. First electronic device 201A and second electronic device 201B optionally communicate via a wired or wireless connection (e.g., via the communication circuitry 222A, 222B) between the two electronic devices.

System 200 is not limited to the components and configuration of FIG. 2C, but can include fewer, other, or additional components and/or electronic devices in multiple configurations. In some examples, system 200 can be implemented in a single device. A person or persons using system 200, is optionally referred to herein as a user or users of the system and/or the devices or devices.

Attention is now directed towards exemplary concurrent displays of a three-dimensional environment on a first electronic device (e.g., corresponding to electronic device 201A) and a second electronic device (e.g., corresponding to electronic device 201B). As discussed below, the first electronic device may be in communication with the second electronic device in a multi-user communication session. In some examples, an avatar (e.g., a representation of) a user of the first electronic device may be displayed in the three-dimensional environment at the second electronic device, and an avatar of a user of the second electronic device may be displayed in the three-dimensional environment at the first electronic device. In some examples, the user of the first electronic device and the user of the second electronic device may be associated with a spatial group in the multi-user communication session. In some examples, interactions with content in the three-dimensional environment while the first electronic device and the second electronic device are in the multi-user communication session may cause the user of the first electronic device and the user of the second electronic device to become associated with different spatial groups in the multi-user communication session.

FIG. 3 illustrates an example of a spatial group in a multi-user communication session that includes a plurality of electronic devices according to some examples of the disclosure. In some examples, a first electronic device 301A may present a three-dimensional environment 350A, and a second electronic device 301B may present a three-dimensional environment 350B. The first electronic device 301A and the second electronic device 301B may be similar to electronic device 101 or 201A/201B, and/or may be a head mountable system/device and/or projection-based system/device (including a hologram-based system/device) configured to generate and/or present a three-dimensional environment, such as, for example, heads-up displays (HUDs), head mounted displays (HMDs), windows having integrated display capability, displays formed as lenses designed to be placed on a person's eyes (e.g., similar to contact lenses), respectively. In the example of FIG. 3, a first user is optionally wearing the first electronic device 301A and a second user is optionally wearing the second electronic device 301B, such that the three-dimensional environment 350A/350B can be defined by X, Y and Z axes (or in other three-dimensional coordinate space coordinates) as viewed from a perspective of the electronic devices (e.g., a viewpoint associated with the electronic device 301A/301B, which may be a head-mounted display, for example).

As shown in FIG. 3, the first electronic device 301A may be in a first physical environment that includes a table 306 and a window 309. Thus, the three-dimensional environment 350A presented using the first electronic device 301A optionally includes captured portions of the physical environment surrounding the first electronic device 301A, such as a representation of the table 306' and a representation of the window 309'. Similarly, the second electronic device 301B may be in a second physical environment, different from the first physical environment (e.g., separate in physical space from the first physical environment), that includes a floor lamp 307 and a coffee table 308. Thus, the three-dimensional environment 350B presented using the second electronic device 301B optionally includes captured portions of the physical environment surrounding the second electronic device 301B, such as a representation of the floor lamp 307' and a representation of the coffee table 308'. Additionally, the three-dimensional environments 350A and 350B may include representations of the floor, ceiling, and walls of the room in which the first electronic device 301A and the second electronic device 301B are located, respectively.

In some examples, the first electronic device 301A and the second electronic device 301B are optionally in a multi-user communication session with third electronic device 301C. In some examples, a third user 305 is wearing the third electronic device 301C, which is optionally a head-mounted display, similar to the HMDs discussed above. In some examples, while the first electronic device 301A, the second electronic device 301B and the third electronic device 301C are in a multi-user communication session, the first electronic device 301A, the second electronic device 301B and the third electronic device 301C are configured to collaboratively present (e.g., via communication circuitry, such as communication circuitry 222A/222B in FIG. 2C) a shared three-dimensional environment (e.g., via their respective three-dimensional environments, such as three-dimensional environment 350A/350B) that includes one or more shared virtual objects (e.g., content such as images, video, audio and the like, representations of user interfaces of applications, etc.). As used herein, the term "shared three-dimensional environment" refers to a three-dimensional environment that is independently presented, displayed, and/or visible at a plurality of electronic devices via which content, applications, data, and the like may be shared and/or presented to users of the plurality of electronic devices.

In some examples, while the first electronic device 301A and the second electronic device 301B are in the multi-user communication session with the third electronic device 301C, a visual representation of a user of each electronic device is presented in the three-dimensional environment that is presented via the other electronic devices. In some examples, a type of visual representation that is presented at a respective electronic device within the multi-user communication session is based on whether the respective electronic device is collocated or non-collocated with the other electronic devices in the multi-user communication session, as described in more detail below.

In FIG. 3, the first electronic device 301A and the third electronic device 301C are collocated in the first physical environment. For example, the first electronic device 301A and the third electronic device 301C are both located in a same physical room that includes the table 306 and window 309. In some examples, the determination that the first electronic device 301A and the third electronic device 301C are collocated in the first physical environment is based on a distance between the first electronic device 301A and the third electronic device 301C. For example, in FIG. 3, the first electronic device 301A and the third electronic device 301C are collocated in the first physical environment because the first electronic device 301A is within a threshold distance (e.g., 0.1, 0.5, 1, 2, 3, 5, 10, 15, 20, etc. meters) of the third electronic device 301C. In some examples, the determination that the first electronic device 301A and the third electronic device 301C are collocated in the first physical environment is based on communication between the first electronic device 301A and the third electronic device 301C. For example, in FIG. 3, the first electronic device 301A and the third electronic device 301C are configured to communicate (e.g., wirelessly, such as via Bluetooth or other peer-to-peer communication networks, Wi-Fi, or a server (e.g., wireless communications terminal)) with each other. In some examples, the first electronic device 301A and the third electronic device 301C are connected to and/or are configured to communicate using a same wireless network in the first physical environment. In some examples, the determination that the first electronic device 301A and the third electronic device 301C are collocated in the first physical environment is based on a strength of a wireless signal transmitted between the first electronic device 301A and third electronic device 301C. For example, in FIG. 3, the first electronic device 301A and the third electronic device 301C are collocated in the first physical environment because a strength of a Bluetooth signal (or other wireless signal) transmitted between the first electronic device 301A and third electronic device 301C is greater than a threshold strength. In some examples, the determination that the first electronic device 301A and the third electronic device 301C are collocated in the first physical environment is based on visual detection of the first electronic device 301A and third electronic device 301C in the first physical environment. For example, as shown in FIG. 3, the third electronic device 301C is positioned in a field of view of the first electronic device 301A (e.g., because the third user 305 is standing in the field of view of the first electronic device 301A), which enables the first electronic device 301A to visually detect (e.g., identify or scan, such as via object detection or other image processing techniques) the third electronic device 301C (e.g., in one or more images captured by the first electronic device 301A, such as via external image sensors 114b-i and 114c-i). Similarly, in the example of FIG. 3, the first electronic device 301A is optionally positioned in a field of view of the third electronic device 301C (e.g., because the first user is standing in the field of view of the third electronic device 301C from a viewpoint of the third electronic device 301C), which enables the third electronic device 301C to visually detect the first electronic device 301A (e.g., in one or more images captured by the third electronic device 301C).

On the other hand, in FIG. 3, the second electronic device 301B is non-collocated with the first electronic device 301A or the third electronic device 301C. For example, as shown in FIG. 3 and as mentioned above, the second electronic device 301B is located (e.g., with the second user) in the second physical environment (e.g., including the floor lamp 307 and coffee table 308), which is different from the first physical environment in which the first electronic device 301A and the third electronic device 301C are both located. In some examples, while the second electronic device 301B is in the second physical environment, the second electronic device 301B is more than the threshold distance (e.g., discussed above) of the first electronic device 301A and the third electronic device 301A. Additionally or alternatively, in some examples, as shown in FIG. 3, the second electronic device 301B is not in the field of view of the first electronic device 301A and/or the third electronic device 301C.

As mentioned above, while electronic devices are communicatively linked in a multi-user communication session, users of the electronic devices may be visually represented within the shared three-dimensional environment based at least in part on the determination of whether the electronic devices are collocated or non-collocated with each other. In FIG. 3, because the first electronic device 301A and the third electronic device 301C are collocated in the first physical environment as discussed above, the users of the first electronic device 301A and third electronic device 301C are represented in the multi-user communication session via their physical personas (e.g., bodies) that are visible directly or in passthrough of the first physical environment (e.g., rather than via virtual representations generated and displayed by the electronic devices). For example, as shown in FIG. 3, the third user 305 is visible in the field of view of the first electronic device 301A (e.g., and the first user is visible in the field of view of the third electronic device 301C in the first physical environment) while the first electronic device 301A and the third electronic device 301C are in the multi-user communication session. In some examples, because the second electronic device 301B is non-collocated with the first electronic device 301A and the third electronic device 301C in the first physical environment, the second user of the second electronic device 301B is visually represented via an avatar 315 in the three-dimensional environment 350A. Similarly, at the second electronic device 301B, an avatar 317 corresponding to the first user of the first electronic device 301A and an avatar 319 corresponding to the third user 305 of the third electronic device 301C are displayed in the three-dimensional environment 350B (e.g., because the first electronic device 301A and the third electronic device 301C are non-collocated with the second electronic device 301B in the second physical environment as discussed above).

In some examples, the presentation of avatars 315/317/319 as part of a shared three-dimensional environment is optionally accompanied by an audio effect corresponding to a voice of the users of the electronic devices 301A/301B/301C. For example, the avatar 315 displayed in the three-dimensional environment 350A using the first electronic device 301A is optionally accompanied by an audio effect corresponding to the voice of the user of the second electronic device 301B. In some such examples, when the user of the second electronic device 301B speaks, the voice of the user may be detected by the second electronic device 301B (e.g., via the one or more microphones 213B in FIG. 2C) and transmitted to the first electronic device 301A (e.g., via the communication circuitry 222B/222A), such that the detected voice of the user of the second electronic device 301B may be presented as audio (e.g., using one or more speakers 216A) to the user of the first electronic device 301A in three-dimensional environment 350A. In some examples, the audio effect corresponding to the voice of the user of the second electronic device 301B may be spatialized (e.g., may be outputted as spatial audio), such that it appears to the user of the first electronic device 301A to emanate from the location of avatar 315 in three-dimensional environment 350A (e.g., despite being outputted from the speakers of the first electronic device 360). Similarly, the avatars 317/319 displayed in the three-dimensional environment 350B using the second electronic device 301B are optionally accompanied by an audio effect corresponding to the voices of the users of the first electronic device 301A and the third electronic device 301C, respectively. For example, when the user of the first electronic device 301A speaks, the voice of the user may be detected by the first electronic device 301A (e.g., via the one or more microphones 213A) and transmitted to the second electronic device 301B (e.g., via the communication circuitry 222A/222B), such that the detected voice of the user of the first electronic device 301A may be presented as audio (e.g., using one or more speakers 216B) to the user of the second electronic device 301B in three-dimensional environment 350B. In some examples, the audio effect corresponding to the voices of the user of the first electronic device 301A and the user of the third electronic device 301C may be spatialized, such that they appear to the user of the second electronic device 301B to emanate from the location of avatar 317 and/or the location of the avatar 319 in the three-dimensional environment 350B (e.g., despite being outputted from the speakers of the second electronic device 301B).

In some examples, while in the multi-user communication session, the avatars 315/317/319 are displayed in the shared three-dimensional environment with respective orientations that correspond to and/or are based on orientations of the electronic devices 301A/301B/301C (and/or the users of electronic devices 301A/301B/301C) in the physical environments surrounding the electronic devices 301A/301B/301C. For example, as shown in FIG. 3, in the three-dimensional environment 350A, the avatar 315 is optionally facing toward the viewpoint of the user of the first electronic device 301A, and in the three-dimensional environment 350B, the avatar 317 is optionally facing toward the viewpoint of the user of the second electronic device 301B. As a particular user moves the electronic device (and/or themself) in the physical environment, the viewpoint of the user changes in accordance with the movement, which may thus also change an orientation of the user's avatar in the three-dimensional environment. For example, with reference to FIG. 3, if the user of the first electronic device 301A were to look leftward in the three-dimensional environment 350A such that the first electronic device 301A is rotated (e.g., a corresponding amount) to the left (e.g., counterclockwise), the user of the second electronic device 301B would see the avatar 317 corresponding to the user of the first electronic device 301A rotate to the right (e.g., clockwise) relative to the viewpoint of the user of the second electronic device 301B in accordance with the movement of the first electronic device 301A.

Additionally, in some examples, while in the multi-user communication session, a field of view of the three-dimensional environments 350A/350B and/or a location of the viewpoint within the three-dimensional environments 350A/350B optionally changes in accordance with movement of the electronic devices 301A/301B/301C (e.g., by the users of the electronic devices 301A/301B/301C). For example, while in the communication session, when the first electronic device 301A is moved closer toward the representation of the table 306' and/or the avatar 315 (e.g., because the user of the first electronic device 301A moved forward in the physical environment surrounding the first electronic device 301A), the field of view of the three-dimensional environment 350A would change accordingly, such that the representation of the table 306', the representation of the window 309' and the avatar 315 appear larger in the field of view. In some examples, each user may independently interact with the three-dimensional environment 350A/350B, such that changes in viewpoints within the three-dimensional environment 350A and/or interactions with virtual objects in the three-dimensional environment 350A by the first electronic device 301A optionally do not affect what is shown in the three-dimensional environment 350B at the second electronic device 301B, and vice versa.

In some examples, the avatars 315/317/319 are virtual representations (e.g., a full-body rendering) of the users of the electronic devices 301A/301B/301C. In some examples, a respective avatar is a representation of a portion or portions (e.g., a rendering of a head, face, head and torso, etc.) of the users of the electronic devices. In some examples, the avatars are user-personalized, user-selected, and/or user-created representations displayed in the three-dimensional environments 350A/350B that are representative of the users of the electronic devices 301A/301B/301C. It is understood that, while the avatars 315/317/319 illustrated in FIG. 3 correspond to bodily representations of the users of the electronic devices 301A/301B/301C, alternative avatars may be provided, such as those described above and/or having various dimensionality (e.g., three-dimensional or two-dimensional).

As used herein, relative to a first electronic device, a collocated user corresponds to a local user and a non-collocated user corresponds to a remote user. As similarly discussed above, the shared three-dimensional environment optionally includes avatars (e.g., avatars 315/317/319) corresponding to the remote users of the electronic devices that are non-collocated in the multi-user communication session. In some examples, the avatars corresponding to the remote users are generated and presented in the shared three-dimensional environment based on (e.g., using) skeletal data associated with the remote users. For example, the skeletal data is used to, at least partially, define one or more visual characteristics of the avatars (e.g., a size (e.g., height) and/or relative thickness of portions of the avatar, such as hands and/or limbs) in the three-dimensional environment. Additionally, the skeletal data is optionally used to track movement of the remote users, which, as discussed below, causes their corresponding avatars to be shifted and/or moved in the three-dimensional environment relative to the viewpoint of a first electronic device. In some examples, as discussed below, the skeletal data associated with local users may also be tracked and shared among the collocated electronic devices in the multi-user communication session to help facilitate presentation of and interaction with virtual objects (e.g., avatars and shared virtual content) in the three-dimensional environment.

As mentioned above, while the first electronic device 301A, the second electronic device 301B and the third electronic device 301C are in the multi-user communication session, their respective three-dimensional environments form and/or correspond to a shared three-dimensional environment that is presented using the electronic devices 301A/301B/301C. In some examples, content that is viewed by one user at one electronic device may be shared with another user at another electronic device in the multi-user communication session. In some such examples, the content may be experienced (e.g., viewed and/or interacted with) by multiple users (e.g., via their respective electronic devices) in the shared three-dimensional environment. For example, as shown in FIG. 3, the three-dimensional environments 350A/350B include a shared virtual object 310 (e.g., which is optionally a horizontally oriented board game associated with Application B) that is viewable by and interactive to the users of the electronic devices 301A/301B/301C. As shown in FIG. 3, the shared virtual object 310 is optionally displayed with a movement element 335 (e.g., a grabber affordance or handlebar or other user interface element) that is selectable to initiate movement of the shared virtual object 310 within the shared three-dimensional environment.

In some examples, the three-dimensional environments presented by the electronic devices include unshared content that is private to one or more users in the multi-user communication session. For example, in FIG. 3, the first electronic device 301A is displaying a private application window 330, which is optionally a virtual object that is not shared among the first electronic device 301A, the second electronic device 301B and the third electronic device 301C in the multi-user communication session. In some examples, the private application window 330 may be associated with a respective application (e.g., Application A) that is operating on the first electronic device 301A (e.g., such as a media player application, a web browsing application, a messaging application, etc.). Because the private application window 330 is not shared with the second electronic device 301B (e.g., or the third electronic device 301C), the second electronic device 301B optionally displays a representation of the private application window 330" in three-dimensional environment 350B. As shown in FIG. 3, in some examples, the representation of the private application window 330" may be a faded, occluded, discolored, and/or translucent representation of the private application window 330 that prevents the user of the second electronic device 301B (e.g., and the user of the third electronic device 301C) from viewing contents of the private application window 330.

As mentioned previously above, in some examples, the user of the first electronic device 301A, the user of the second electronic device 301B and the user of the third electronic device 301C are in and/or form a spatial group within the multi-user communication session. In some examples, the spatial group may be a baseline (e.g., a first or default) spatial group within the multi-user communication session. For example, when the user of the first electronic device 301A, the user of the second electronic device 301B and/or the user of the third electronic device 301C initially join the multi-user communication session, the user of the first electronic device 301A, the user of the second electronic device 301B, and the user of the third electronic device 301C are automatically (and initially) associated with (e.g., grouped into) the spatial group within the multi-user communication session. In some examples, while the users are in the spatial group as shown in FIG. 3, the user of the first electronic device 301A, the user of the second electronic device 301B and the user of the third electronic device 301C have a first spatial arrangement (e.g., arranged according to and/or defining a first spatial template) within the shared three-dimensional environment. For example, the user of the first electronic device 301A, the user of the second electronic device 301B, and the user of the third electronic device 301C, including objects that are shared and displayed in the shared three-dimensional environment, have spatial truth within the spatial group. In some examples, spatial truth requires a consistent spatial arrangement between users (or representations thereof) and shared virtual objects. For example, a distance between the viewpoint of the user of the first electronic device 301A and the avatar 315 corresponding to the user of the second electronic device 301B may be the same as a distance between the viewpoint of the user of the second electronic device 301B and the avatar 317 corresponding to the user of the first electronic device 301A. Similarly, in FIG. 3, a distance between the avatar 315 corresponding to the user of the second electronic device 301B and the physical location of the third electronic device 301C (e.g., including the third user 305) in the three-dimensional environment 350A from the viewpoint of the first electronic device 301A may be the same as a distance between the viewpoint of the user of the second electronic device 301B and the avatar 319 corresponding to the user of the third electronic device 301C in the three-dimensional environment 350B. As described herein, if the location of the viewpoint of the user of the first electronic device 301A moves, the avatar 317 corresponding to the user of the first electronic device 301A moves in the three-dimensional environment 350B in accordance with the movement of the location of the viewpoint of the user relative to the viewpoint of the user of the second electronic device 301B. As another example, if the user of the first electronic device 301A performs an interaction on the shared virtual object 310 (e.g., moves the virtual object 310 in the three-dimensional environment 350A), the second electronic device 301B (e.g., and the third electronic device 301C) alters or updates display of the shared virtual object 310 in the three-dimensional environment 350B in accordance with the interaction (e.g., moves the virtual object 310 by a corresponding (e.g., same) amount in the three-dimensional environment 350B). In the example of FIG. 3, the spatial group that is established among the first electronic device 301A, the second electronic device 301B, and the third electronic device 301C is a hybrid spatial group. For example, as defined herein, the multi-user communication session includes collocated and non-collocated users and electronic devices. Maintaining spatial truth among the viewpoints of the users in the multi-user communication session advantageously improves user interaction and experience of shared virtual objects and content. For example, it may be desirable to enable users who are collocated in a first physical environment and who are participating in a multi-user communication session with one or more users who are non-collocated in the first physical environment to coordinatively move and/or reposition virtual content that is shared and presented in a three-dimensional environment that is optionally viewable by and/or interactive to the collocated and non-collocated users in the multi-user communication session.

It is understood that, in some examples, fewer than and/or more than three electronic devices may be communicatively linked in a multi-user communication session. For example, in a situation in which two electronic devices are communicatively linked in a multi-user communication session, a first electronic device would present a single visual representation (e.g., a passthrough representation if collocated or a virtual representation (e.g., avatar) if non-collocated), rather than the two visual representations shown in FIG. 3, corresponding to the users of the other single electronic device. It should therefore be understood that the various processes and exemplary interactions described herein with reference to the first electronic device 301A, the second electronic device 301B, and the third electronic device 301C in the multi-user communication session illustrated in FIG. 3 optionally apply to situations in which fewer than or more than three electronic devices are communicatively linked in a multi-user communication session. It is also understood that, though illustrated in FIG. 3 as being such, a multi-user communication session need not include both collocated and non-collocated electronic devices (e.g., forming a hybrid spatial group). For example, a multi-user communication session can alternatively be established between solely collocated electronic devices (e.g., forming a local spatial group) or solely non-collocated electronic devices (e.g., forming a remote spatial group).

Attention is now directed towards interactions with one or more virtual objects that are displayed in a three-dimensional environment presented at an electronic device (e.g., corresponding to electronic device 201).

FIGs. 4A through 4W generally illustrate a first electronic device detecting and responding to events that correspond to requests to reset a spatial arrangement of virtual content of the multi-user communication session, where the multi-user communication session includes a first user of the first electronic device and a second user of a second electronic device, who are collocated in a physical environment, and includes one or more users of electronic devices who are non-collocated in the physical environment, according to some examples of the disclosure.

In FIG.4A, a first electronic device 101a presents, via display 120a, a view of a first three-dimensional environment 450a, and a second electronic device 101b presents, via display 120b, a view of a second three-dimensional environment 450b while the first electronic device 101a and the second electronic device 101b are collocated in a physical environment 416 and in a multi-user communication session that includes a third user of a third electronic device. In FIG. 4A, the view of the first three-dimensional environment 450a shown in the display 120a of the first electronic device 101a shows the relative positioning of objects (e.g., virtual objects and physical objects) in the first three-dimensional environment 450a in a vertical dimension and a horizontal dimension (and, optionally in a depth dimension) from the viewpoint of the first electronic device 101a. In FIG. 4A, the view of the second three-dimensional environment 450b shown in the display 120b of the second electronic device 101b shows the relative positioning of objects (e.g., virtual objects and physical objects) in the second three-dimensional environment 450b in a vertical dimension and a horizontal dimension (and, optionally in a depth dimension) from the viewpoint of the second electronic device 101b.

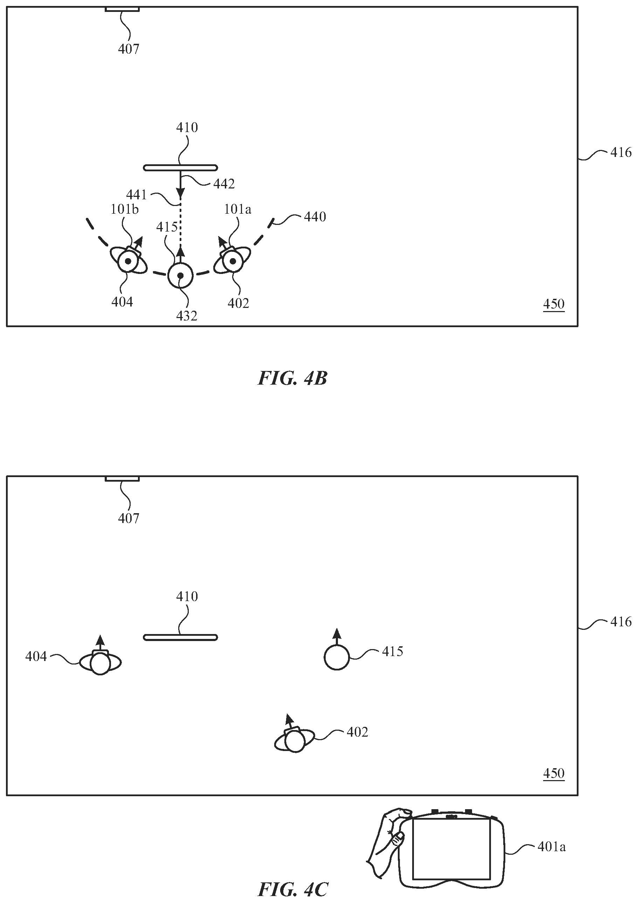

FIG. 4B illustrates an overhead view that shows relative positioning of objects (e.g., virtual objects and physical objects) in a shared three-dimensional environment 450 (e.g., the first three-dimensional environment 450a and second three-dimensional environment 450b) in a horizontal dimension and a depth dimension, shows the viewpoint of the first electronic device 101a, as indicated with the arrow extending from the first electronic device 101a, from which the first electronic device 101a presents the view of the first three-dimensional environment 450a in FIG. 4A, and shows the viewpoint of the second electronic device 101b, as indicated with the arrow extending from the second electronic device 101b, from which the second electronic device 101b presents the view of the second three-dimensional environment 450b in FIG. 4A.

In FIG. 4A, a multi-user communication session that includes the first user 402 of the first electronic device 101a, the second user 404 of the second electronic device 101b, and a third user of a third electronic device (not shown) is established. The multi-user communication session of FIG. 4A optionally includes one or more characteristics of the multi-user communication session described with reference to FIG. 3. In FIG. 4A, the first electronic device 101a and the second electronic device 101b are collocated in a physical environment 416, such as described with reference to the first electronic device 301A and the third electronic device 301C being collocated in the first physical environment in FIG. 3. In FIG. 4A, the third user of the third electronic device is non-collocated with the first electronic device 101a and the second electronic device 101b, such as described with reference to the second electronic device 301B being non-collocated with the first electronic device 301A or the third electronic device 301C in FIG. 3. In FIG. 4A, the spatial group that is established among the first electronic device 101a, the second electronic device 101b, and the third electronic device is a hybrid spatial group, such as described with reference to the spatial group that is established among the first electronic device 301A, the second electronic device 301B, and the third electronic device 301C in FIG. 3 being a hybrid spatial group.

In FIG. 4A, since the first user 402 and the second user 404 share the physical environment 416 (e.g., are collocated in the physical environment 416) while in the multi-user communication session that includes the first user 402, the second user 404, and the third user, the first user 402 and the second user 404, relative to each other, are represented in the three-dimensional environments 450a/450b via their physical personas (e.g., bodies) that are visible directly or in passthrough of the physical environment 416 (e.g., rather than via virtual representations generated and displayed by the electronic devices), such as described with reference to the users of the first electronic device 301A and third electronic device 301C in FIG. 3. For example, in the three-dimensional environments 450a/450b presented via the first electronic device 101a and the second electronic device 101b, the first user 402 and the second user 404 are represented in the multi-user communication session via their physical personas (e.g., bodies) relative to each other. For example, were the viewpoint of the first electronic device 101a to change to face the second user 404 of the second electronic device 101b (e.g., were the arrow extending from the first electronic device 101a to face the direction of the second user 404 of the second electronic device 101b illustrated in FIG. 4B), the view of the first three-dimensional environment 450a presented via display 120a would include the physical persona (e.g., body) of the second user 404, which in this example would be visible directly or in passthrough of the physical environment 416 (e.g., optionally rather than via a virtual representation (e.g., an avatar of the second user 404) generated and displayed by the first electronic device 101a). Continuing with this example, were the viewpoint of the second electronic device 101b to change to face the first user 402 of the first electronic device 101a (e.g., were the arrow extending from the second electronic device 101b to face the direction of the first user 402 of the first electronic device 101a in FIG. 4B), the view of the second three-dimensional environment 450b presented via display 120b would include the physical persona (e.g., body) of the first user 402, which in this example would be visible directly or in passthrough of the physical environment 416 (e.g., optionally rather than via a virtual representation (e.g., an avatar of the first user 402) generated and displayed by the second electronic device 101b).

In FIG. 4A, since the third user is non-collocated with the first user 402 and the second user 404 (e.g., the third user is in a physical environment that is different from the physical environment 416 in which the first user 402 and the second user 404 are located), the third user who is in the multi-user communication session with the first user 402 and the second user 404 is visually represented via an avatar in the three-dimensional environments 450a/450b presented via the first electronic device 101a and the second electronic device 101b, such as described with reference to the second user of the second electronic device 301B being visually represented via an avatar 315 in the three-dimensional environment 350A in FIG. 3. The avatar 415 of FIGs. 4B through 4W includes one or more characteristics of the avatar(s) 315/317/319 described with reference to FIG. 3. For example, were the viewpoint of the first electronic device 101a to change to face the location of the avatar 415 in FIG. 4B (e.g., were the arrow extending from the first electronic device 101a to face the direction of the location of the avatar 415), the view of the first three-dimensional environment 450a presented via display 120a would include the avatar 415 (e.g., a virtual representation of the third user) generated and displayed by the first electronic device 101a rather than a physical persona (e.g., physical body) of the third user since the third user is not physically in the physical environment 416 in which the first user 402 and the second user 404 are collocated. Continuing with this example, were the viewpoint of the second electronic device 101b to change to face the location of the avatar 415 in FIG. 4B (e.g., were the arrow extending from the second electronic device 101b to face the direction of the location of the avatar 415), the view of the second three-dimensional environment 450b presented via display 120b would include the avatar 415 (e.g., a virtual representation the third user) generated and displayed by the second electronic device 101b rather than a physical persona (e.g., physical body) of the third user since the third user is not physically in the physical environment 416 in which the first user 402 and the second user 404 are collocated.

The first electronic device 101a of FIGs. 4A-4W optionally includes one or more features described with reference to electronic device 101 of FIG. 1, 201/201A/ 201B of FIGs. 2A and 2C, and/or 301A/301B of FIG. 3. The second electronic device 101b of FIGs. 4A-4W optionally includes one or more characteristics described with reference to electronic device 101 of FIG. 1, 201/201A/ 201B of FIGs. 2A and 2C, and/or 301A/301B of FIG. 3. The third electronic device of the third user, which is not in the physical environment 416, described with reference to FIGs. 4A-4W optionally includes one or more features described with reference to electronic device 101 of FIG. 1, 201/201A/ 201B of FIGs. 2A and 2C, and/or 301A/301B of FIG. 3.

As described above, in FIG. 4A, the first electronic device 101a presents the first three-dimensional environment 450a and the second electronic device 101b presents the second three-dimensional environment 450b. The three-dimensional environments 450a/450b optionally include one or more characteristics of the three-dimensional environments presented by the electronic devices in FIG. 3. In FIG. 4A, the first user 402 is wearing the first electronic device 101a and the second user 404 is wearing the second electronic device 101b, such that the three-dimensional environments 450a/450b can be defined by X, Y and Z axes (or in other three-dimensional coordinate space coordinates) as viewed from a perspective of the electronic devices (e.g., a viewpoint associated with the first electronic device 101a and the second electronic device 101b). In some examples, the third user who is in the multi-user communication session with the first user 402 and the second user 404 in FIG. 4A is wearing the third electronic device, such that the three-dimensional environment presented via the third electronic device can similarly be defined by X, Y and Z axes (or in other three-dimensional coordinate space coordinates) as viewed from a perspective of the third electronic device (e.g., a viewpoint associated with the third electronic device).

As shown in FIG. 4A, first user 402 of the first electronic device 101a and second user 404 of the second electronic device 101b are in a physical environment 416 that includes a window 407. In FIG. 4A, the first three-dimensional environment 450a presented using the first electronic device 101a optionally includes captured portions of the physical environment 416 surrounding the first electronic device 101a, such as the window 407 (e.g., a representation of the physical window that is in the physical environment 416), from the viewpoint of the first electronic device 101a illustrated with the arrowing extending from the first electronic device 101a in the overhead view in FIG. 4B. Similarly, in FIG. 4A, the second three-dimensional environment 450b presented using the second electronic device 101b optionally includes captured portions of the physical environment 416 surrounding the second electronic device 101b, such as the window 407 (e.g., a representation of the physical window that is in the physical environment 416), from the unique viewpoint of the second electronic device 101b (e.g., which is different from that of the first electronic device 101a) illustrated with the arrow extending from the second electronic device 101b in the overhead view in FIG. 4B. Additionally, in FIG. 4A, the first three-dimensional environment 450a and the second three-dimensional environment 450b include representations of the floor, ceiling, and walls of the room in which the first electronic device 101a and the second electronic device 101b are located, respectively.

Overhead views in FIGs. 4B through 4W show the locations of the first user 402 and the second user 404 in the physical environment 416, the viewpoint of the first electronic device 101a and the viewpoint of the second electronic device 101b, which are indicated by the origination points and directions of the arrows extending from the first electronic device 101a and the second electronic device 101b respectively, and the locations of the shared virtual content of the multi-user communication session relative to the physical environment 416 (e.g., the physical locations that correspond to the locations of the shared virtual content of the multi-user communication session in the three-dimensional environments 450a/450b presented via the first electronic device 101a and the second electronic device 101b). In the overhead views in FIGs. 4B through 4W, the first user 402 of the second electronic device 101b and the second user 404 of the second electronic device 101b are in the same physical environment 416, and the shared three-dimensional environment 450 in the overhead views correspond to the three-dimensional environments 450a/450b in the respective figure. For example, the shared three-dimensional environment 450 is an overhead view of the first three-dimensional environment 450a presented via the first electronic device 101a and is an overhead view of the second three-dimensional environment 450b presented via the second electronic device 101b.

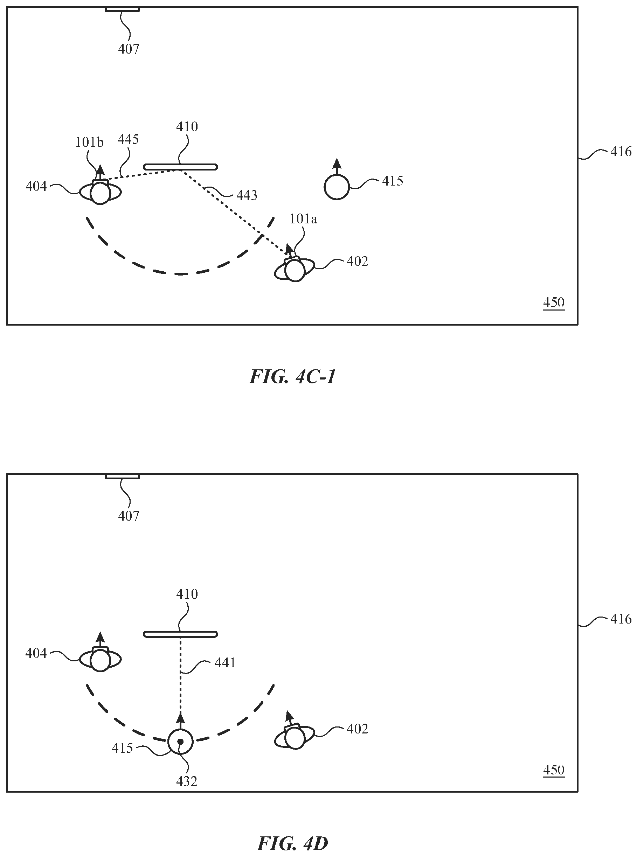

As described above, the overhead view of FIG. 4B shows the relative positioning of objects (e.g., virtual objects and physical objects) in the first three-dimensional environment 450a in the horizontal dimension and the depth dimension, shows the viewpoint of the first electronic device 101a, as indicated with the origination point and direction of the arrow extending from the first electronic device 101a, from which the first electronic device 101a presents the view of the first three-dimensional environment 450a in FIG. 4A, and shows the viewpoint of the second electronic device 101b, as indicated with the origination point and direction of the arrow extending from the second electronic device 101b, from which the second electronic device 101b presents the view of the second three-dimensional environment 450b in FIG. 4A. Similarly, the overhead views in FIGs. 4C through 4W show the relative positioning of objects (e.g., virtual objects and physical objects) in the first three-dimensional environment 450a that are presented via display 120a of the first electronic device 101a from the illustrated viewpoint of the first electronic device 101a, as indicated with the origination point and direction of the arrow extending from the first electronic device 101a, in the respective figure, and show the relative positioning of objects (e.g., virtual objects and physical objects) in the second three-dimensional environment 450b that are presented via display 120b of the second electronic device 101b from the illustrated viewpoint of the second electronic device 101b, as indicated with the origination point and direction of the arrow extending from the first electronic device 101a, in the respective figure. For example, just like the view of the first three-dimensional environment 450a presented in display 120a in FIG. 4A includes the user interface 410 because, as shown in overhead view in FIG. 4B, the viewpoint of the first electronic device 101a faces the direction of the user interface 410, as shown with the arrow extending from the first electronic device 101a in FIG. 4B, the views of the first three-dimensional environment 450a that would be presented by the first electronic device 101a (e.g., via the display 120a of the first electronic device 101a) in FIGs. 4C through 4W would include the object(s) that are in the direction that the viewpoint of the first electronic device 101a faces, as shown with the arrow extending from the first electronic device 101a, in the overhead view in the respective figure. Similarly, just like the view of the second three-dimensional environment 450b presented in display 120b in FIG. 4A includes the user interface 410 because, as shown in overhead view 401 in FIG. 4B, the viewpoint of the second electronic device 101b faces the direction of the user interface 410, as shown with the arrow extending from the second electronic device 101b in the overhead view 401 in FIG. 4B, the views of the second three-dimensional environment 450b presented by the second electronic device 101b (e.g., via the display 120b of the second electronic device 101b) in FIGs. 4C through 4W would include the object(s) that are in the direction that the viewpoint of the first electronic device 101a faces, as shown with the arrow extending from the first electronic device 101a, in the overhead view in the respective figure.

In FIG. 4A, the first electronic device 101a and the second electronic device 101b have shared map data of the physical environment 416 to obtain a shared spatial coordinate system of the physical environment 416 between the first electronic device 101a and the second electronic device 101b, which allows the first electronic device 101a and the second electronic device 101b to present shared virtual content of the multi-user communication session at the same corresponding physical location in the physical environment 416. In particular, the multi-user communication session that includes the first user 402, the second user 404, and the third user who is represented by the avatar 415 in FIGs. 4A through 4W includes shared virtual content. In FIG. 4A, the shared virtual content includes the shared user interface 410 of an application (e.g., a movie application, an Internet application, a gaming application, or another type of application), which in the illustrated example has a vertical orientation in the three-dimensional environments 450a/450b. In FIG. 4A the shared virtual content also includes the avatar 415, which is a visual representation of the third user as described above. In FIG. 4A, the shared user interface 410 and the avatar 415 are being displayed in the first three-dimensional environment 450a and the second three-dimensional environment 450b using the established shared spatial coordinate system of the physical environment 416 between the first electronic device 101a and the second electronic device 101b.

As shown in the overhead view in FIG. 4B, the first electronic device 101a and the second electronic device 101b present the shared user interface 410 and the avatar 415 with spatial truth. For example, the corresponding physical location at which the first electronic device 101a presents the shared user interface 410 via display 120a in FIG. 4A is the same as the corresponding physical location at which the second electronic device 101b present the shared user interface 410 via display 120b in FIG. 4A. Additionally, the corresponding physical location at which the first electronic device 101a presents the avatar 415 is the same as the corresponding physical location at which the second electronic device 101b present the avatar 415, as shown in the overhead view in FIG. 4B. In some examples, presenting the shared virtual content at the same corresponding physical locations in the physical environment 416 between three-dimensional environments 450a/450b ensures presentation of the shared user interface 410 and avatar 415 remains consistent between the first three-dimensional environment 450a and the second three-dimensional environment 450b, and thereby reduces errors associated with the first user 402 and the second user 404 interacting with the shared user interface 410 in their respective environments via their respective electronic devices.

For example, in FIG. 4A, the first electronic device 101a displays the shared user interface 410 at a first location in the first three-dimensional environment 450a, where the first location in the first three-dimensional environment 450a is associated with a first location in the physical environment 416, and the second electronic device 101b displays the shared user interface 410 at a first location in the second three-dimensional environment 450b, where the first location in the second three-dimensional environment 450b is associated with the same first location the physical environment 416. Continuing with this example, were the second user 404 to point, with the second user's physical hand, toward the left edge of the shared user interface 410 (e.g., toward a first position on the shared user interface 410 in the second three-dimensional environment 450b), the first user 402 would observe the second user's physical hand pointing toward the left edge of the shared user interface 410 (e.g., toward the same first position on the shared user interface 410) in the first three-dimensional environment 450a. As such, in FIG. 4A, since the shared user interface 410 is being displayed using the shared spatial coordinate system of the physical environment 416 between the first electronic device 101a and the second electronic device 101b, there is not an offset (or the offset is less than a threshold offset, such as less than 0.2, 0.1, 0.01, 0.005 m, or another threshold offset) between a location of the shared user interface 410 in the first three-dimensional environment 450a and a location of the shared user interface 410 in the second three-dimensional environment 450b, relative to the physical location to which display of the shared user interface 410 corresponds in either three-dimensional environment.

In FIG. 4A, the first electronic device 101a concurrently presents the shared user interface 410 at the first location and the avatar 415 at a second location in the first three-dimensional environment 450a. Note that even though the avatar 415 is not in the view of the first three-dimensional environment 450a in FIG. 4A (e.g., based on the current viewpoint of the first electronic device 101a), the avatar 415 is still associated with a specific location in the first three-dimensional environment 450a such that, were the field of view (e.g., the viewpoint of the first electronic device 101a) to change to include the location of the avatar 415 in the first three-dimensional environment 450a, the first electronic device 101a would display the avatar 415 at that location, since the avatar 415 would be in the field of view. Additionally, in FIG. 4A, the second electronic device 101b concurrently presents the shared user interface 410 and the avatar 415 in the second three-dimensional environment 450b. Note that even though the avatar 415 is not in the view of the second three-dimensional environment 450b in FIG. 4A (e.g., based on the current viewpoint of the second electronic device 101b), the avatar 415 is still associated with a specific location in the second three-dimensional environment 450b such that, were the field of view (e.g., the viewpoint of the second electronic device 101b) to change to include the location of the avatar 415 in the second three-dimensional environment 450b, the second electronic device 101b would display the avatar 415 at that location, since the avatar 415 would be in the field of view, and that location of display of the avatar 415 would be the same corresponding physical location at which the first electronic device 101a is presenting the avatar 415 in the first three-dimensional environment 450a.

**In** some examples, the placement location of avatar 415 in the shared three-dimensional environment 450 of FIG. 4B was determined by the first electronic device 101a and/or the second electronic device 101b before the first electronic device 101a and/or the second electronic device 101b present the avatar 415 in their respective three-dimensional environments. In some examples, the placement location for the avatar 415 was determined according to the process described below.

**In** particular, in some examples, the process for determining the placement location for the avatar 415 in FIG. 4B includes analyzing/identifying physical locations of the first electronic device 101a and the second electronic device 101b within a shared (e.g., synchronized) coordinate space/system of the first spatial group in FIG. 4B. For example, as indicated in the overhead view of FIG. 4B, the first electronic device 101a is located at a first location and the second electronic device 101b is located at a second location, different from the first location, in the physical environment 416. Furthermore, the first electronic device 101a has a first orientation (e.g., indicated by the arrow extending from the first electronic device 101a) and the second electronic device 101b has a second orientation (e.g., indicated by the arrow extending from the second electronic device 101b) in the physical environment 416, as shown in the overhead view in FIG. 4B.

**In** some examples, the process for determining the placement location for the avatar 415 in FIG. 4B includes simulating a best-fit shape to the first electronic device 101a and the second electronic device 101b (e.g., relative to the shared user interface 410). For example, as shown in the overhead view of FIG. 4B, a predefined shape (e.g., curve or arc) 440 is applied to the first electronic device 101a and the second electronic device 101b based on the physical locations of the first electronic device 101a and the second electronic device 101b in the physical environment 400 discussed above. In some examples, the simulated best-fit shape is selected based on the type of virtual object that is shared and presented in the three-dimensional environment when the indication of the request to add the third user to the multi-user communication session is (e.g., was first) detected. For example, in FIG. 4B, the virtual object is the shared user interface 410, which is a vertically oriented virtual object (e.g., the content of the shared user interface 410 is displayed on a front-facing surface of the shared user interface 410), as shown in the overhead view 401. Accordingly, as shown in FIG. 4B, the best-fit shape is the arc (e.g., curve) 440. In some examples, the arc 440 defines a set of one or more locations (e.g., a plurality of seats of a spatial template) in the shared three-dimensional environment 450, for presentation of visual representations of remote users (e.g., avatars) of the multi-user communication session based on the locations of the collocated users in the multi-user communication session and based on the location of the shared user interface 410 in the shared three-dimensional environment 450. In some examples, when an avatar 415 is initially presented at a location along the arc 440, the location optionally meets the one or more criteria and/or the one or more second criteria described below. For example, the arc 440 is the spatial template in FIG. 4B for the virtual content of multi-user communication session whereby avatars of remote users can be presented relative to the shared user interface 410 in FIG. 4B. For example, were a remote user to join the multi-user communication session in FIG. 4B, the remote user would be presented at a location along the arc 440 in FIG. 4B. In some examples, as illustrated in the overhead view of FIG. 4B, the arc 440 is based on an orientation of the shared user interface 410 in the shared three-dimensional environment 450. For example, the normal vector 442 extending from a center of the front-facing surface of the shared user interface 410 would intersect the midpoint (e.g., center) of the arc 440 in FIG. 4B.

In some examples, the process for determining the placement location for the avatar 415 in FIG. 4B includes identifying a placement location along the arc 440 that meets one or more criteria. In some examples, the placement location along the arc 440 is a location along the arc 440 that meets one or more criteria. In some examples, the location along the arc 440 that meets the one or more criteria is a location along the arc 440 that is not within a threshold distance (e.g., 0, 0.3, 1, 2, or 3 meters, or another threshold distance) of the locations of the first user 402 and the second user 404. In some examples, a first plurality of locations along the arc 440, including the location along the arc 440 that meets the one or more criteria, are not within the threshold distance of the locations of the first user 402 and the second user 404. In some examples, the location along the arc 440 that meets the one or more criteria is the location of the first plurality of locations where an angle between a line extending from the location and to a center of the shared user interface 410 and a normal of the shared user interface 410 is a minimum angle for the first plurality of locations along the arc 440 (e.g., 0, 10, 20, 30, 40 degrees, or another minimum angle for the first plurality of locations along the arc 440).

As shown in FIG. 4B, the first electronic device 101a and the second electronic device 101b have previously identified the original placement location 432 along the arc 440 for the avatar 415. The original placement location 432 is the location of the plurality of locations along the arc 440 that meets the one or more criteria described above, and the avatar 415 is being presented at that location in FIG. 4B. Additionally, in some examples, as indicated in the overhead view in FIG. 4B, when the avatar 415 is presented (e.g., displayed) in the shared three-dimensional environment 450, the avatar 415 is presented with an orientation that faces toward the shared user interface 410, as indicated by the arrow extending from the avatar 415. Additionally, as shown in FIG. 4B, the avatar 415 and the shared user interface 410 have a first spatial arrangement 441 (e.g., position and/or orientation) relative to each other in the shared three-dimensional environment 450, which is optionally the original spatial arrangement between the presented avatar 415 and the shared user interface 410 relative to each other in the shared three-dimensional environment 450.

While the first electronic device 101a and the second electronic device 101b present the shared virtual content of the multi-user communication session, the first user 402 and/or the second user 404 may move around in the physical environment 416, such as shown from FIG. 4B to FIG. 4C. Additionally, while the first electronic device 101a and the second electronic device 101b present the shared virtual content of the multi-user communication session, the avatar 415 may be moved in the three-dimensional environment, as shown from FIG. 4B to FIG. 4C. As described above, in some examples, the avatars corresponding to the remote users are generated and presented in the shared three-dimensional environment 450 based on (e.g., using) skeletal data associated with the remote users. In some examples, the skeletal data is used to track movement of the remote users, which, as discussed below, causes their corresponding avatars to be shifted and/or moved in the shared three-dimensional environment. In some examples, the avatar 415 is moved in the shared three-dimensional environment 450 in response to the first electronic device 101a and/or the second electronic device 101b detecting, from the third electronic device of the third user, an indication that the third user has moved in the physical environment of the third user. In some examples, the indication includes a direction and magnitude (e.g., speed, distance, and/or duration) of movement of the third user. In some examples, in response to detecting the indication, the first electronic device 101a and/or the second electronic device 101b move the avatar 415 in a direction and by a magnitude in the shared three-dimensional environment 450 that corresponds to the direction and magnitude of movement of the third user included in the indication. Were the indication to suggest movement of the third user in a first direction by a first magnitude, the first electronic device 101a and the second electronic device 101b would move the avatar 415 in a corresponding first direction by a corresponding first magnitude in the shared three-dimensional environment. Were the indication to suggest movement of the third user in the first direction by a second magnitude, different from (e.g., greater or less than) the first magnitude, the first electronic device 101a and the second electronic device 101b would move the avatar 415 in the corresponding first direction by a corresponding second magnitude in the shared three-dimensional environment 450 that is different from the corresponding first magnitude. Were the indication to suggest movement of the third user in a second direction, different from the first direction, the first electronic device 101a and the second electronic device 101b would move the avatar 415 in a corresponding second direction that is different from the corresponding first direction.

In FIG. 4C, the first electronic device 101a detects an event that corresponds to a request to reset a spatial arrangement of the virtual content of the multi-user communication session in the shared three-dimensional environment 450. In FIG. 4C, the request is initiated based on user input (e.g., from the third user) detected at the third electronic device that is in the multi-user communication session in FIGs. 4A-4C, but not in the physical environment 416. In some examples, resetting the spatial arrangement includes setting or resetting the virtual locations for shared content of the multi-user communication session, such as user interfaces, and representations of users (e.g., avatars) in the multi-user communication session, optionally according to a spatial template (e.g., the arc 440).

In some examples, the third electronic device, which is not physically in the shared three-dimensional environment (e.g., is not in the physical environment 416 in which the first user 402 and the second user 404 are collocated), detects a press of the button 101c' of the third electronic device 101c provided by a hand of the third user, as shown with the glyph 401a in FIG. 4C, and the third electronic device 101c optionally corresponds detection of that input to the request to reset the spatial arrangement of the shared virtual content of the multi-user communication session in a third three-dimensional environment presented via the third electronic device. Additionally or alternatively, in some examples, the user input is a touch input (e.g., on a touch screen), a press and/or rotation of a physical button, an air gesture (e.g., an air pinch gesture or another gesture), a verbal request (e.g., detected using a microphone), a gaze direction (e.g., detected by an eye-tracking camera(s)), or another type of user input.

In some examples, in response to detecting the user input, the third electronic device 101c resets the spatial arrangement of the shared virtual content of the multi-user communication session in a spatial group that includes the third user, including causing the shared user interface 410 to move to a different location in the third three-dimensional environment presented via the third electronic device, and optionally causing avatars that correspond to the first user 402 and the second user 404 and that are presented in the third three-dimensional environment, different from the shared three-dimensional environment of the first user 402 and the second user 404, of the third user to be moved to different locations as well.

Additionally, in some examples, in response to detecting the user input from the third user, the third electronic device transmits, to the first electronic device 101a, an indication. In some examples, the indication is based on the user input from the third user and optionally indicates that the third user has requested to reset a spatial arrangement of virtual content of the multi-user communication session in the third three-dimensional environment of the third user relative to the viewpoint of the third user. In some examples, detection of the indication includes detection of an event that corresponds to the request to reset the spatial arrangement of the virtual of the multi-user communication session in the shared three-dimensional environment 450. In response to detecting the indication (e.g., the event), the first electronic device 101a initiates a process to reset the spatial arrangement of the virtual content of the multi-user communication session in the shared three-dimensional environment 450, as described below.

As shown in FIG. 4C, the shared three-dimensional environment 450 includes the shared user interface 410 and the avatar 415 of the multi-user communication session. In some examples, in response to detecting the event that is based on the user input detected at the third electronic device of the third user who is represented in the shared three-dimensional environment 450 as the avatar 415, the first electronic device 101a (e.g., and the second electronic device 101b) maintains presentation of the shared user interface 410. As such, the first electronic device 101a (e.g., and the second electronic device 101b) does not change the location of the shared user interface in the shared three-dimensional environment 450 in response to detecting an event that corresponds to an indication that a non-collocated user of the multi-user communication session requests to reset a spatial arrangement of the virtual content in the three-dimensional environment of the non-collocated user. Additionally, in response to detecting the event that is based on the user input detected at the third electronic device of the third user who is represented in the shared three-dimensional environment 450 as the avatar 415, the first electronic device 101a (e.g., and/or the second electronic device 101b) determines a spatial arrangement among the first user 402, the second user 404, and the shared user interface 410 to determine a new placement location for the avatar 415 in the shared three-dimensional environment 450, as shown in FIG. 4C-1. For example, the first electronic device 101a determines the spatial arrangement 445 between the second user 404 and the shared user interface 410 relative to each other and determines the spatial arrangement 443 between the first user 402 and the shared user interface 410 relative to each other, as shown in FIG. 4C-1.

In some examples, in response to detecting the event, the first electronic device 101a initiates a process for determining a new (e.g., updated) placement location for the avatar 415, such as described with reference to the first electronic device 101a and/or the second electronic device 101b determining the (e.g., original or initial) placement location 432 for the avatar in FIGs. 4A and 4B. For example, as shown in FIG. 4D, the first electronic device 101a simulates the same best-fit shape (e.g., the arc 440) that was simulated in FIG. 4B at the same location in the shared three-dimensional environment 450 in FIG. 4B to identify a new placement location that meets one or more second criteria. In some examples, the new placement location along the arc 440 that meets the one or more second criteria is or corresponds to a location along the arc 440 that, of the plurality of locations along the arc 440, is closest to the original placement location (e.g., the placement location 432 of FIG. 4B) and that is not within a threshold distance of the locations of the first user 402 and/or the second user 404. For example, the new placement location along the arc 440 that meets the one or more second criteria is a location along the arc 440 where the spatial arrangement between the avatar 415, if placed at the location along arc 440, and the shared user interface 410 would be the closest valid spatial arrangement to the first spatial arrangement 441, where the variable is the location of the avatar 415 along the arc 440. In some examples, a valid spatial arrangement between the avatar 415 and the shared user interface 410 relative to each other that includes the avatar 415 placed along the arc 440 is a spatial arrangement that is not within a threshold of the spatial arrangement 445 between the second user 404 and the shared user interface 410 relative to each other and the spatial arrangement 443 between the first user 402 and the shared user interface 410 relative to each other.

As shown in the overhead view in FIG. 4D, the first electronic device 101a determines that the original placement location (e.g., the placement location 432 of FIG. 4B) of the avatar 415 meets the second one or more criteria described above, and thus, the first electronic device 101a and the second electronic device 101b present the avatar 415 at the original placement location of the avatar 415 (e.g., the placement location 432 of FIG. 4B). In other words, because the original placement location along the arc 440 remains unoccupied in the shared three-dimensional environment 450 (e.g., by the first user 402 or the second user 404), the first electronic device 101a and the second electronic device 101b move the avatar 415 to a location in the shared three-dimensional environment 450 corresponding to the original placement location in FIG. 4B, relative to the current (e.g., updated) viewpoints of the first electronic device 101a and the second electronic device 101b, in response to detecting the event described with reference to FIG. 4C. Accordingly, the avatar 415 and the first electronic device 101a have (e.g., maintain) the first spatial arrangement 441 relative to each other in FIG. 4D, as in FIG. 4B. In some examples, in response to detecting the event described with reference to FIG. 4C, the first electronic device 101a reduces in visual prominence (e.g., fades out, decreases in brightness, etc.) the avatar 415 at its illustrated location in FIG. 4C, and increases in visual prominence (e.g., fades in, increases in brightness, etc.) the avatar 415 at its illustrated location in FIG. 4D. For example, from the viewpoint of the first user 402 of the first electronic device 101a, the first electronic device 101a redisplays (e.g., moves) the avatar 415 from the location in the shared three-dimensional environment 450 illustrated in FIG. 4C-1 to the location in the shared three-dimensional environment 450 illustrated in FIG. 4D.

Additionally, note that in some examples, in response to detecting the event described with reference to FIG. 4C, the first electronic device 101a presents the avatar 415 with the same orientation (e.g., an orientation that faces toward the shared user interface 410, as indicated by the arrow extending from the avatar 415) that the avatar 415 had in FIG. 4B, which is optionally an orientation that is included in the presentation of the avatar 415 at the placement location in accordance with the spatial template. Accordingly, the avatar 415 and shared user interface 410 have the first spatial arrangement 441 relative to each other in the shared three-dimensional environment 450 in FIG. 4D, as in FIG. 4B.

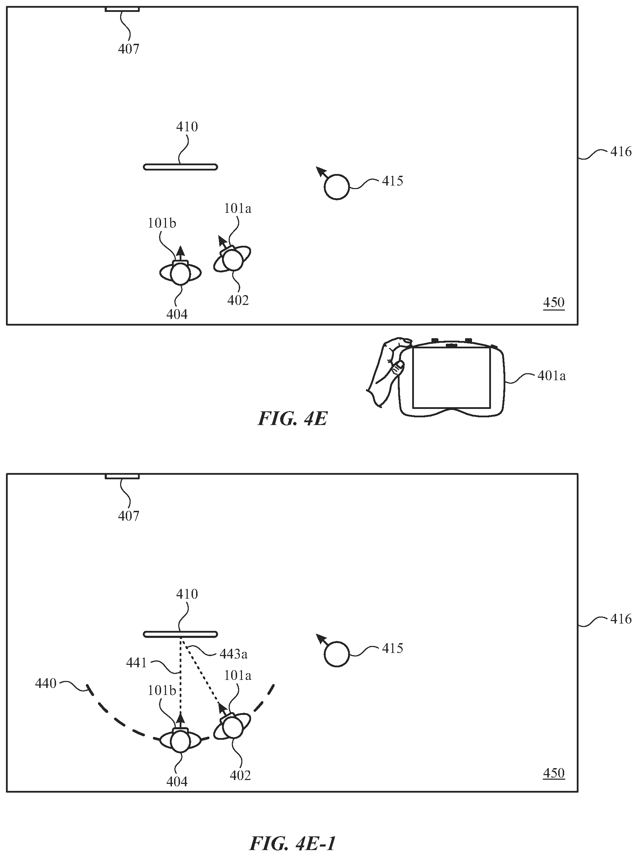

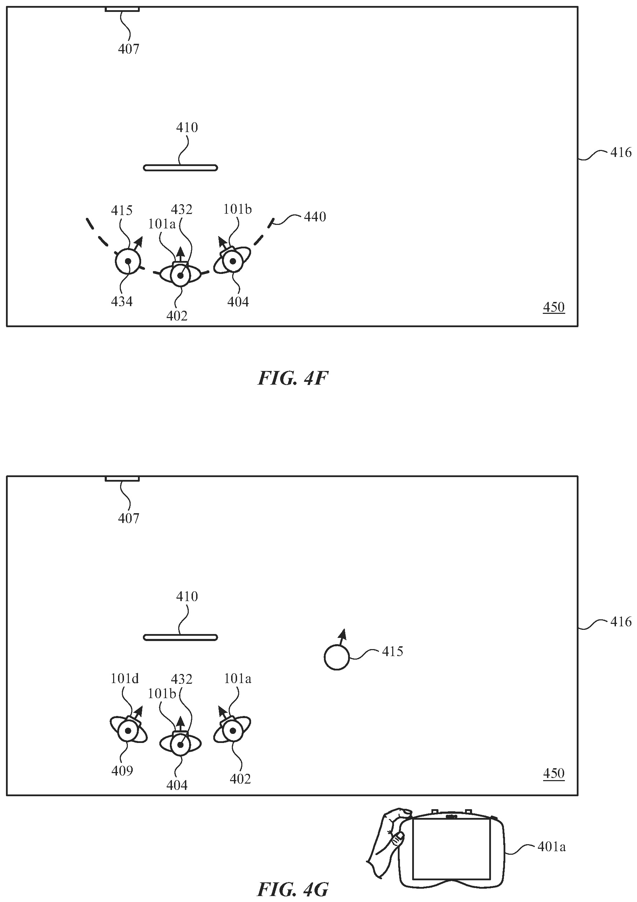

FIGs. 4E and 4F illustrate an example of the first electronic device 101a detecting and responding to an event corresponding to a request to reset a spatial arrangement of the virtual content of the multi-user communication session, where the request is initiated based on user input detected at the third electronic device (e.g., a device of a user who is non-collocated with the first user 402 and the second user 404 in the physical environment 416), and where, when the event is detected, the first user 402 and the second user 404 are at locations in the physical environment 416 that are different from their locations in FIG. 4C, according to some examples of the disclosure.

In FIG. 4E, the request is initiated based on user input (e.g., from the third user) detected at the third electronic device that is in the multi-user communication session in FIGs. 4A-4C, but not in the physical environment 416. In some examples, resetting the spatial arrangement includes setting or resetting the virtual locations for shared content of the multi-user communication session such as user interfaces, and representations of users (e.g., avatars) in the multi-user communication session, optionally according to a spatial template (e.g., the arc 440).

In some examples, the third electronic device 101c, which is not physically in the shared three-dimensional environment (e.g., is not in the physical environment 416 in which the first user 402 and the second user 404 are collocated), detects a press of the button 101c' of the third electronic device 101c provided by a hand of the third user, as shown with the glyph 401a in FIG. 4E, and the third electronic device 101c optionally corresponds detection of that input to the request to reset the spatial arrangement of the shared virtual content of the multi-user communication session in a third three-dimensional environment presented via the third electronic device. Additionally or alternatively, in some examples, the user input is a touch input (e.g., on a touch screen), a press and/or rotation of a physical button, an air gesture (e.g., an air pinch gesture or another gesture), a verbal request (e.g., detected using a microphone), a gaze direction (e.g., detected by an eye-tracking camera(s)), or another type of user input.

In some examples, in response to detecting the user input, the third electronic device 101c resets the spatial arrangement of the shared virtual content of the multi-user communication session in a spatial group that includes the third user, including causing the shared user interface 410 to move to a different location in the third three-dimensional environment presented via the third electronic device, and optionally causing avatars that correspond to the first user 402 and the second user 404 and that are presented in the third three-dimensional environment, different from the shared three-dimensional environment of the first user 402 and the second user 404, of the third user to be moved to different locations as well.

Additionally, in some examples, in response to detecting the user input from the third user, the third electronic device transmits, to the first electronic device 101a, an indication, as similarly described above. In some examples, the indication is based on the user input from the third user and optionally indicates that third user has requested to reset a spatial arrangement of virtual content of the multi-user communication session in the third three-dimensional environment of the third user relative to the viewpoint of the third user. In some examples, detection of the indication is detection of an event that corresponds to the request to reset the spatial arrangement of the virtual of the multi-user communication session in the shared three-dimensional environment. In response to detecting the indication (e.g., the event), the first electronic device 101a initiates a process to reset the spatial arrangement of the virtual content of the multi-user communication session in the shared three-dimensional environment 450, as described below.

As shown in FIG. 4E, the shared three-dimensional environment 450 includes the shared user interface 410 and the avatar 415. In some examples, in response to detecting the event that is based on the user input detected at the third electronic device of the third user who is represented in the shared three-dimensional environment 450 as the avatar 415, the first electronic device 101a (e.g., and the second electronic device 101b) maintains presentation of the shared user interface 410. As such, the first electronic device 101a does not change the location of the shared user interface in the shared three-dimensional environment 450 in response to detecting an event that corresponds to an indication that a non-collocated user of the multi-user communication session requests to reset a spatial arrangement of the virtual content in the three-dimensional environment of the non-collocated user, as previously discussed above. Additionally, in response to detecting the event that is based on the user input detected at the third electronic device of the third user who is represented in the shared three-dimensional environment 450 as the avatar 415, the first electronic device 101a (e.g., and/or the second electronic device 101b) determines a spatial arrangement among the first user 402, the second user 404, and the shared user interface 410 to determine a new placement location for the avatar 415 in the shared three-dimensional environment 450, such as described with reference to FIGs. 4C and 4D. For example, the first electronic device 101a determines that the spatial arrangement between the second user 404 and the shared user interface 410 relative to each other is the first spatial arrangement 441 and determines the spatial arrangement 443 between the first user 402 and the shared user interface 410 relative to each other, as shown in FIG. 4E-1.

Additionally, as shown in FIG. 4E-1, the first electronic device 101a simulates the same best-fit shape that was simulated in FIG. 4B at the same location in the shared three-dimensional environment in FIG. 4B, and then identifies a (e.g., updated) placement location along the arc 440 that meets the one or more second criteria described above. In some examples, the placement location along the arc 440 that meets the one or more second criteria is or corresponds to a location along the arc 440 that is closest to the original placement location of the avatar 415 and that is not within a threshold distance of the current locations of the first user 402 and the second user 404. As shown in the overhead view in FIG. 4F, the first electronic device 101a (e.g., and/or the second electronic device 101b) has determined that the placement location 434, which is different from the original placement location along the arc 440, meets the second one or more criteria. Specifically, in FIG. 4E, the original placement location of the avatar 415 does not meet the one or more second criteria described above. For example, when the event of FIG. 4E is detected, the first electronic device 101a determines that the spatial arrangement between the second user 404 and the shared user interface 410 relative to each other is the first spatial arrangement 441, as shown in FIG. 4E-1, which is the same spatial arrangement between the avatar 415 and the shared user interface 410 in FIG. 4B when the avatar 415 was at its original placement location relative to the shared user interface 410. Accordingly, since the shared user interface 410 has not changed locations in the shared three-dimensional environment 450 from FIG. 4B to FIG. 4E-1, the first electronic device 101a (e.g., and the second electronic device 101b) places the avatar 415 at another location along the arc 440 that is different from the original placement location 432 of FIG. 4B, namely the illustrated location of the avatar 415 in FIG. 4F, which is a location along the arc 440 (e.g., a seat of the plurality of seats along the arc 440, such as a seat or location that is adjacent to the original placement location 432 of FIG. 4B) that meets the one or more second criteria described above.

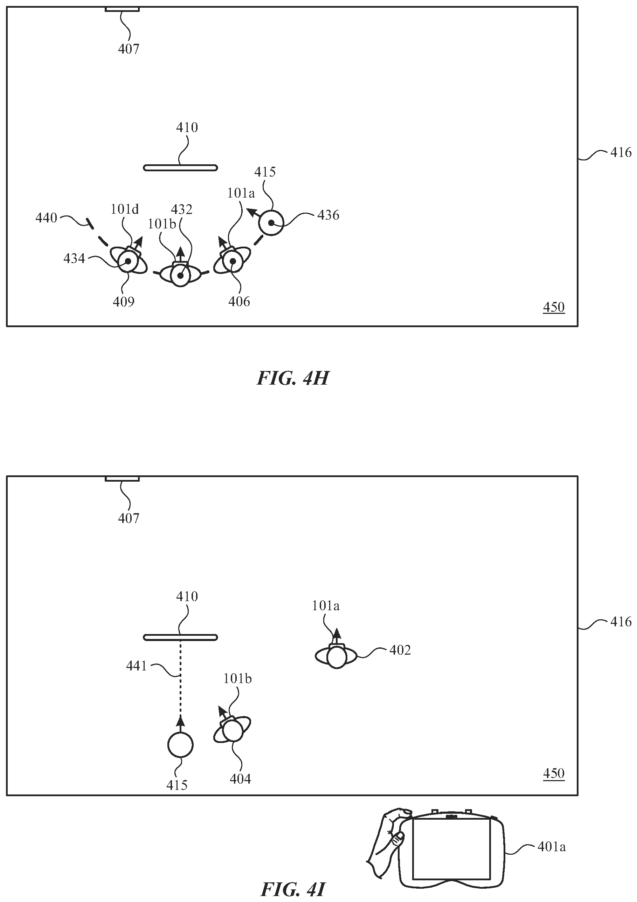

FIGs. 4G and 4H illustrate another example of the first electronic device 101a detecting and responding to an event corresponding to a request to reset a spatial arrangement of the virtual content of the multi-user communication session, where the request is initiated based on user input detected at the third electronic device (e.g., the device of the third user who is non-collocated with the first user 402 and the second user 404 in the physical environment 416), according to some examples of the disclosure.

From FIG. 4B to FIG. 4G, a fourth user 409 of a fourth electronic device 101d has joined the multi-user communication session that includes the first user 402, the second user 404, and the third user of the third electronic device. The fourth user 409 is collocated in the physical environment 416 with the first user 402 and the second user 404. The fourth electronic device 101d includes one or more characteristics of the first electronic device 101a and the second electronic device 101b. The fourth electronic device 101d also presents the shared three-dimensional environment 450 (e.g., a view of the shared three-dimensional environment 450 is presented via the fourth electronic device based on the viewpoint of the fourth electronic device 101d).

Additionally, from FIG. 4B to FIG. 4G, the spatial arrangement of the multi-user communication session in the physical environment 416 has changed (e.g., without user input from the collocated users for resetting the spatial arrangement of the virtual content of multi-user communication session). For example, the avatar 415 optionally is moved to the illustrated location in shared three-dimensional environment 450 in FIG. 4G from the original placement location 432 in response to the first electronic device 101a detecting an indication of movement of the third user such as described above.

In FIG. 4G, the first electronic device 101a detects the request to reset the spatial arrangement of the virtual content of the multi-user communication session in the shared three-dimensional environment 450. The request in FIG. 4G is initiated based on user input (e.g., from the third user) detected at the third electronic device that is in the multi-user communication session in FIGs. 4A-4F, but not in the physical environment 416. In some examples, resetting the spatial arrangement includes setting or resetting the virtual locations for shared content of the multi-user communication session, such as user interfaces and representations of users (e.g., avatars) in the multi-user communication session.

In some examples, the third electronic device, which is not physically in the shared three-dimensional environment 450 (e.g., is not in the physical environment 416 in which the first user 402, the second user 404, and the fourth user 409 are collocated), detects a press of the button 101c' of the third electronic device 101c provided by a hand of the third user, as shown with glyph 401a in FIG. 4G, and the third electronic device optionally corresponds detection of that input to the request to reset the spatial arrangement of the shared virtual content of the multi-user communication session in a third three-dimensional environment presented via the third electronic device. Additionally or alternatively, in some examples, the user input is a touch input (e.g., on a touch screen), a press and/or rotation of a physical button, an air gesture (e.g., an air pinch gesture or another gesture), a verbal request (e.g., detected using a microphone), a gaze direction (e.g., detected by an eye-tracking camera(s)), or another type of user input).

In some examples, in response to detecting the user input, the third electronic device 101c resets the spatial arrangement of the shared virtual content of the multi-user communication session in a spatial group (not shown) that includes the third user, including causing the shared user interface 410 to move to a different location in the third three-dimensional environment (not shown) presented via the third electronic device, and optionally causing avatars (not shown) that correspond to the first user 402, the second user 404, and the fourth user 409 and that are presented in the third three-dimensional environment of the third user, different from the shared three-dimensional environment 450 of the first user 402, the second user 404, and the fourth user 409, to move to different locations as well.

Additionally, in some examples, in response to detecting the user input from the third user, the third electronic device transmits, to the first electronic device 101a, an indication. In some examples, the indication is based on the user input from the third user and optionally indicates that third user has requested to reset a spatial arrangement of virtual content of the multi-user communication session in the third three-dimensional environment of the third user relative to the viewpoint of the third user. In some examples, detection of the indication is detection of an event that corresponds to the request to reset the spatial arrangement of the virtual content of the multi-user communication session in the shared three-dimensional environment. In response to detecting the indication (e.g., the event), the first electronic device 101a (e.g., and the second electronic device 101b and/or the fourth electronic device 101 d) initiates a process to reset the spatial arrangement of the virtual content of the multi-user communication session in the shared three-dimensional environment 450, as described below.

As shown in FIG. 4G, the shared three-dimensional environment 450 includes the shared user interface 410 and the avatar 415. In some examples, in response to detecting the event that is based on the user input detected at the third electronic device of the third user who is represented in the shared three-dimensional environment 450 as the avatar 415, the first electronic device 101a (e.g., and the second electronic device 101b and/or the fourth electronic device 101d) maintains presentation of the shared user interface 410 in the shared three-dimensional environment 450. As such, the first electronic device 101a does not change the location of the shared user interface in the shared three-dimensional environment 450 in response to detecting an event that corresponds to an indication that a non-collocated user of the multi-user communication session requests to reset a spatial arrangement of the virtual content in the three-dimensional environment of the non-collocated user. Additionally, in response to detecting the event of FIG. 4G, the first electronic device 101a determines a spatial arrangement among the first user 402, the second user 404, and the fourth user 409, and the shared user interface 410 to determine a new placement location for the avatar 415 in the shared three-dimensional environment, such as described with reference to FIGs. 4C and 4D.

For example, as shown in FIG. 4G, the first electronic device 101a simulates the same best-fit shape (e.g., the arc 440) that was simulated in FIG. 4B at the same location in the shared three-dimensional environment in FIG. 4B, and then identifies a (e.g., updated) placement location along the arc 440 that meets one or more criteria (e.g., the one or more second criteria described above). In some examples, the placement location along the arc 440 that meets the one or more criteria is a location along the arc 440 that is closest to the original placement location 432 of FIG. 4B and that is not within a threshold distance of the locations of the first user 402, the second user 404 and the fourth user 409 in FIG. 4G. In FIG. 4H, the original placement location 432 does not meet the one or more second criteria described above nor does the placement location 434. As shown in the overhead view in FIG. 4H, the first electronic device 101a has determined that the placement location 436 meets the one or more second criteria described above. Accordingly, the first electronic device 101a (e.g., and the second electronic device 101b and the fourth electronic device 101d) presents the avatar 415 at the placement location 436 in FIG. 4H, which is a location along the arc 440 (e.g., a seat of the plurality of seats along the arc 440, such as a seat or location that is not the original placement location 432 and that is not adjacent to the original placement location 432 of FIG. 4B (e.g., the placement location 436 is more than two seats away from the original placement location 432 along the arc 440)) that meets the one or more second criteria described above. Accordingly, in response to detecting an event that corresponds to a request, from a remote user, to reset a spatial arrangement of the virtual content of the multi-user communication session in the shared three-dimensional environment, the first electronic device 101a determines an updated placement location for the avatar 415 that meets the one or more second criteria described above.

In some examples, the first electronic device 101a detects and responds to (e.g., is configured to detect and respond to) user input from the first user 402 corresponding to a request to reset the spatial arrangement of the virtual content of the multi-user communication session in the shared three-dimensional environment 450, as shown from FIG. 4I to FIG. 4J to FIG. 4K discussed below.

In FIG. 4I, the first electronic device 101a detects an input corresponding to a request to reset a spatial arrangement of the virtual content of the multi-user communication session. In some examples, the first electronic device 101a detects a press of the button of the first electronic device 101a provided by a hand of the first user 402, such as shown in the glyph 401a in FIG. 4I, and the first electronic device 101a optionally corresponds detection of that input to the request to reset the spatial arrangement of the shared virtual content of the multi-user communication session in the shared three-dimensional environment 450. Additionally or alternatively, in some examples, the user input is a touch input (e.g., on a touch screen), a press and/or rotation of a physical button, an air gesture (e.g., an air pinch gesture or another gesture), a verbal request (e.g., detected using a microphone), a gaze direction (e.g., detected by an eye-tracking camera(s)), or another type of user input.

Note that the spatial arrangement of the virtual content of the multi-user communication session in FIG. 4I is the same as the same arrangement of the virtual content of multi-user communication session in FIG. 4B. For example, the spatial arrangement between the avatar 415 and the shared user interface 410 is the first spatial arrangement 441 in FIG. 4I, as in FIG. 4B, and the locations in the shared three-dimensional environment 450 at which the avatar 415 and shared user interface 410 are being presented in FIG. 4I are the same as their respective locations of presentation in FIG. 4B.

In response to detecting the user input in FIG. 4I, the first electronic device 101a determines a preferred placement location for the shared user interface 410. Note that, in response to detecting the user input in FIGs. 4C, 4E, and 4G, which is user input from a user who is remote to the physical environment 416, the first electronic device 101a determines a preferred placement for the avatar 415 without moving the shared user interface 410 in the shared three-dimensional environment 450, which helps ensure collocated user interaction with the shared user interface 410 remains consistent, in that the spatial arrangement between the collocated users in the physical environment 416 and the shared user interface 410 relative to each other in the shared three-dimensional environment 450 does not change in response to the remote user input in FIGs. 4C, 4E, and 4G, respectively. However, the user input in FIG. 4I is user input from a collocated user in the physical environment 416, and in response to detecting the user input in FIG. 4I, the first electronic device 101a determines new placements locations for the shared user interface 410 and the avatar 415 in the shared three-dimensional environment 450, which changes the spatial arrangement between the collocated users in the physical environment 416 and the shared user interface 410 relative to each other in the shared three-dimensional environment 450 while maintaining the spatial arrangement between the avatar 415 and the shared user interface 410 relative to each other.

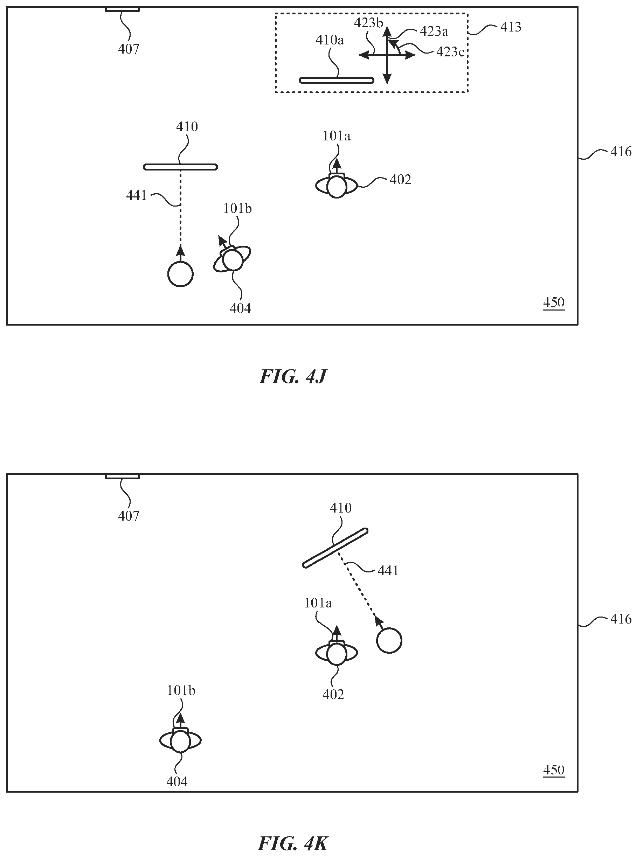

In some examples, determining the preferred placement location for the shared user interface 410 includes simulating placement of a user interface at different locations, and simulating placements of the avatar(s) relative to the user interface, where the spatial arrangement(s) between the different locations of the user interface and the simulated avatar(s) are the same as the spatial arrangement(s) when the user input to reset was detected by the first electronic device 101a, to determine a preferred location for the shared user interface that is based on the physical locations of the collocated users, where the simulated avatar(s) would not conflict in location with the locations of the collocated users. In some examples, determining the preferred placement location for the shared user interface 410 includes simulating placement of a user interface 410a, that has the same dimensions (e.g., size) of the shared user interface 410, at a first simulated placement location that is based on a direction of a gaze of the first user 402 and/or a forward facing direction of the first user 402 when the user input in FIG. 4I is detected. For example, were the direction of the gaze of the first user 402 and/or a forward facing direction of the first user 402 when the user input in FIG. 4I is detected a first gaze direction and/or a first forward facing direction, the first simulated placement location of the user interface 410a is a first respective simulated placement location in the shared three-dimensional environment 450. Continuing with this example, were the direction of the gaze of the first user 402 and/or the forward facing direction of the first user 402 when the user input in FIG. 4I is detected a second gaze direction and/or a second forward facing direction, different from the first gaze direction and/or the first forward facing direction, the first simulated placement location of the user interface 410a is a second respective simulated placement location, different from the first respective simulated placement location, in the shared three-dimensional environment 450. It should be noted that region 413 and the elements therein (e.g., described below) in FIG. 4J are not being presented in the shared three-dimensional environment 450 and are being shown for ease of illustration of operations (e.g., the simulation of placements) performed by the first electronic device 101a in response to the input of FIG. 4I. In FIG. 4J, the first simulated placement location is the illustrated location of the simulated user interface 410a in the shared three-dimensional environment 450. In some examples, in FIG. 4J, a spatial arrangement between the first simulated placement location and the first user 402 relative to each other is the same as the spatial arrangement between the original placement location 432 of the avatar 415 and the location of the shared user interface 410 relative to each other in FIGs. 4B/4J (e.g., the spatial arrangement between the first user 402 and the user interface 410a relative to each other is the first spatial arrangement 441). For example, a distance between the first user 402 and the first simulated placement location (e.g., of the user interface 410a) is the same as the distance between the avatar 415 and the shared user interface 410 in FIG. 4J.

Additionally, determining the preferred placement location for the shared user interface 410 in response to the input of FIG. 4I includes simulating placement of the user interface 410a at a plurality of locations, as indicated with the arrows 423a/423b in FIG. 4J, that are within a threshold distance of the first simulated placement location, and/or in a plurality of orientations, as indicated with the arrow 423c in FIG. 4J, that are within a threshold angular distance of the orientation of the shared user interface 411 at the first placement location, to determine the preferred placement location for the shared user interface 410. For example, the plurality of locations includes locations that are within 0.5 meters, 1 meter, or 2 meters from the first placement location in the direction given by the arrows 423a. For example, the plurality of locations includes locations that are within 0.5 meters, 1 meter, or 2 meters from the first placement location in the direction given by the arrows 423b. Additionally, determining the preferred placement location includes simulating placement of the user interface 410a at the plurality of locations in a plurality of orientations at the plurality of locations, as indicated with the arrow 423c. For example, the plurality of orientations includes orientations that are within 10 degrees, 15 degrees, or 20 degrees of the first orientation of the shared user interface at the first simulated placement location.

In some examples, the first electronic device 101a simulates placement of the user interface 410a at the plurality of locations and in the plurality of orientations at the plurality of locations and simulates placement(s) of an avatar (e.g., an avatar having the dimensions of the avatar 415) relative to the plurality of locations and the plurality of orientations to determine a location of the plurality of locations where the spatial arrangement between the simulated avatar and the user interface 410a at the location of the plurality of locations, relative to each other, is the first spatial arrangement 441, and where the spatial arrangement between the first user 402 and the user interface 410a at the location of the plurality of locations, relative to each other, is not the first spatial arrangement 441. In particular, the first electronic device 101a simulates placement of the user interface 410a at the plurality of locations and in the plurality of orientations at the plurality of locations and simulates placement(s) of the avatar relative to the plurality of locations and the plurality of orientations to determine a location of the plurality of locations for which the spatial arrangement between the simulated avatar and the user interface 410a at the location of the plurality of locations, relative to each other, is the first spatial arrangement 441 as described above, and for which the angle between a line extending from the location of the first user 402 to the center of the user interface 410 and a normal (e.g., the normal line) of the user interface 410a is a minimum for the location(s) of the plurality of locations for which the spatial arrangement between the simulated avatar and the user interface 410a is the first spatial arrangement 441 and for which the spatial arrangement between the first user 402 and the user interface 410a is not the first spatial arrangement 441.

From FIG. 4J to FIG. 4K, the first electronic device 101a determines the preferred placement location for the shared user interface 410 and presents the shared user interface 410 at the preferred placement location. Additionally, the first electronic device 101a ceases presentation of the avatar 415 at its illustrated location in the shared three-dimensional environment 450 in FIG. 4J and presents the avatar 415 at its illustrated location in the shared three-dimensional environment 450 in FIG. 4K. Additionally, the avatar 415 and the shared user interface 410 have the first spatial arrangement 441 relative to each other in FIG. 4K, as in FIG. 4I. That is, in response to the resetting input of FIG. 4I, the first electronic device 101a moves the shared user interface 410 to the preferred placement location and moves the avatar 415 to a location that causes the spatial arrangement between the avatar 415 and the shared user interface 410 to be the first spatial arrangement 441. Thus, in response to the resetting input of FIG. 4I, the first electronic device 101a moves the shared user interface 410 and the avatar 415, and the locations to which the shared user interface 410 and the avatar 415 are moved and the orientations in which the shared user interface 410 and the avatar 415 are displayed at those locations are based on the preferred placement location of the shared user interface 410.

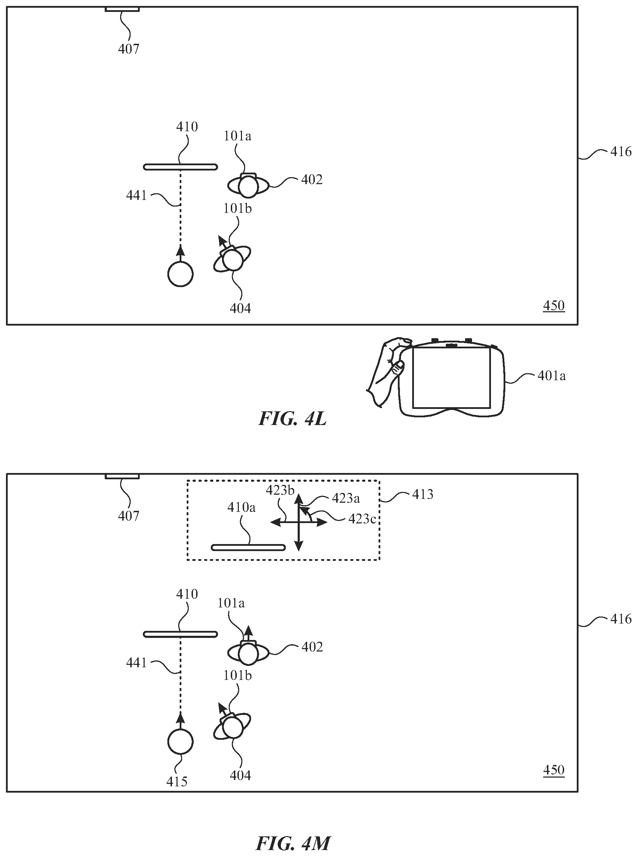

Note that, in FIG. 4K, the preferred placement location for the shared user interface 410 is determined independent of a location of the second user 404 because, when the event of FIG. 4I is detected, the first user 402 (e.g., a position of the first user 402 and/or of the first electronic device 101a) is not in a field of view of the second electronic device 101b. Were the first user 402 (e.g., the position of the first user 402 and/or of the first electronic device 101a) in the field of view of the second electronic device 101b when an event corresponding to a request to reset the spatial arrangement of the virtual content in the shared three-dimensional environment 450 relative to the viewpoint of the first electronic device 101a is detected, such as the event of FIG. 4I, the updated placement location for the shared user interface 410 is (e.g., would be) determined based on the location of the second user 404 in the shared three-dimensional environment 450, such as shown from FIG. 4L to FIG. 4M to FIG. 4N discussed below.

FIGs. 4L through 4N illustrate the first electronic device 101a detecting and responding to user input from the first user 402 corresponding to a request to reset the spatial arrangement of the virtual content of the multi-user communication session in the shared three-dimensional environment 450, according to some examples.

In FIG. 4L, the first electronic device 101a detects an input corresponding to a request to reset a spatial arrangement of the virtual content of the multi-user communication session. In some examples, the first electronic device 101a detects a press of a button of the first electronic device 101a provided by a hand 402a of the first user 402, such as shown with glyph 401a in FIG. 4L, and the first electronic device 101a optionally corresponds detection of that input to the request to reset the spatial arrangement of the shared virtual content of the multi-user communication session in the shared three-dimensional environment 450 presented via the first electronic device 101a and the second electronic device 101b. Additionally or alternatively, in some examples, the user input is a touch input (e.g., on a touch screen), a press and/or rotation of a physical button, an air gesture (e.g., an air pinch gesture or another gesture), a verbal request (e.g., detected using a microphone), a gaze direction (e.g., detected by an eye-tracking camera(s)), or another type of user input.

Note that the spatial arrangement of the virtual content of the multi-user communication session in FIG. 4L is the same as the spatial arrangement of the virtual content of multi-user communication session in FIG. 4B. For example, the spatial arrangement between the avatar 415 and the shared user interface 410 is the first spatial arrangement 441 in FIG. 4I as in FIG. 4B.

In response to detecting the user input in FIG. 4L, the first electronic device 101a determines a preferred placement location for the shared user interface 410, as similarly discussed above. In some examples, determining the preferred placement location for the shared user interface 410 includes simulating placement of a user interface 410a, that has the same dimensions (e.g., size) of the shared user interface 410, at a first simulated placement location that is based on a direction of the gaze of the first user 402 and/or a forward facing direction of the first user 402 when the user input in FIG. 4L is detected. For example, were the direction of the gaze of the first user 402 and/or a forward facing direction of the first user 402 when the user input in FIG. 4L is detected a first gaze direction and/or a first forward facing direction, the first simulated placement location of the user interface 410a is a first respective simulated placement location in the shared three-dimensional environment 450. Continuing with this example, were the direction of the gaze of the first user 402 and/or the forward facing direction of the first user 402 when the user input in FIG. 4L is detected a second gaze direction and/or a second forward facing direction, different from the first gaze direction and/or the first forward facing direction, the first simulated placement location of the user interface 410a is a second respective simulated placement location, different from the first respective simulated placement location, in the shared three-dimensional environment 450. It should be noted that the region 413 and the elements therein in FIG. 4J are not being presented in the shared three-dimensional environment 450. In FIG. 4M, the first simulated placement location is the illustrated location of the simulated user interface 410a in the shared three-dimensional environment 450. In some examples, in FIG. 4M, a spatial arrangement between the first simulated placement location and the first user 402 relative to each other is the first spatial arrangement 441. For example, a distance between the first user 402 and the first simulated placement location is the same as the distance between the avatar 415 and the shared user interface 410 in FIG. 4L.

Additionally, determining the preferred placement location for the shared user interface 410 in response to the input of FIG. 4L includes simulating placement of the user interface 410a at a plurality of locations, as indicated with the arrows 423a/423b in FIG. 4M, that are within a threshold distance of the first simulated placement location, and/or in a plurality of orientations, as indicated with the arrow 423c in FIG. 4M, that are within a threshold angular distance of the first orientation of the user interface 410a at the first simulated placement location, to determine the preferred placement location for the shared user interface 410. For example, the plurality of locations includes locations that are within 0.5 meters, 1 meter, or 2 meters from the first placement location in the directions (e.g., the depth directions) given by the arrows 423a. For example, the plurality of locations includes locations that are within 0.5 meters, 1 meter, or 2 meters from the first simulated placement location in the directions (e.g., the horizontal directions) given by the arrows 423b. Additionally, determining the preferred placement location includes simulating placement of the user interface 410a at the plurality of locations in a plurality of orientations at the plurality of locations, as indicated with the arrow 423c (e.g., rotation about a vertical axis of the user interface 410a). For example, the plurality of orientations includes orientations that are within 10 degrees, 15 degrees, or 20 degrees of the first orientation of the shared user interface at the first simulated placement location.

In some examples, the first electronic device 101a simulates placement of the user interface 410a at the plurality of locations and in the plurality of orientations at the plurality of locations and simulates placement (s) of an avatar relative to the user interface 410a described above to determine, at each location of the plurality of locations and in each orientation of the plurality of orientations at the plurality of locations, 1) a first angle between a line extending from the first user 402 to a center of the user interface 410a and a normal of the user interface 410a, and 2) a second angle between a line extending from the second user 404 to the center of the user interface 410a and the normal of the user interface 410a. In some examples, the preferred placement location for the shared user interface 410 is the location of the plurality of locations where the first angle and the second angle are not equal to an angle between a line extending from the location of the simulated avatar and the center of the user interface 410a and the normal of the user interface 410a in FIG. 4L, and optionally where the first angle and the second angle are minima (e.g., a minimum) for a set of one or more first angles and a set of one or more second angles in which the first angle and the second angle are not equal to the angle between the line extending from the location of the avatar 415 and the center of the user interface 410a and the normal of the user interface 410a. In some examples, the preferred placement location for the shared user interface 410 is the location of the plurality of locations where the spatial arrangement between the simulated avatar and the user interface 410a at the location of the plurality of locations, relative to each other, is the first spatial arrangement 441, the spatial arrangement between the first user 402 and the user interface 410a at the location of the plurality of locations, relative to each other, is not the first spatial arrangement 441, and the spatial arrangement between the second user 404 and the user interface 410a at the location of the plurality of locations, relative to each other, is not the first spatial arrangement 441.

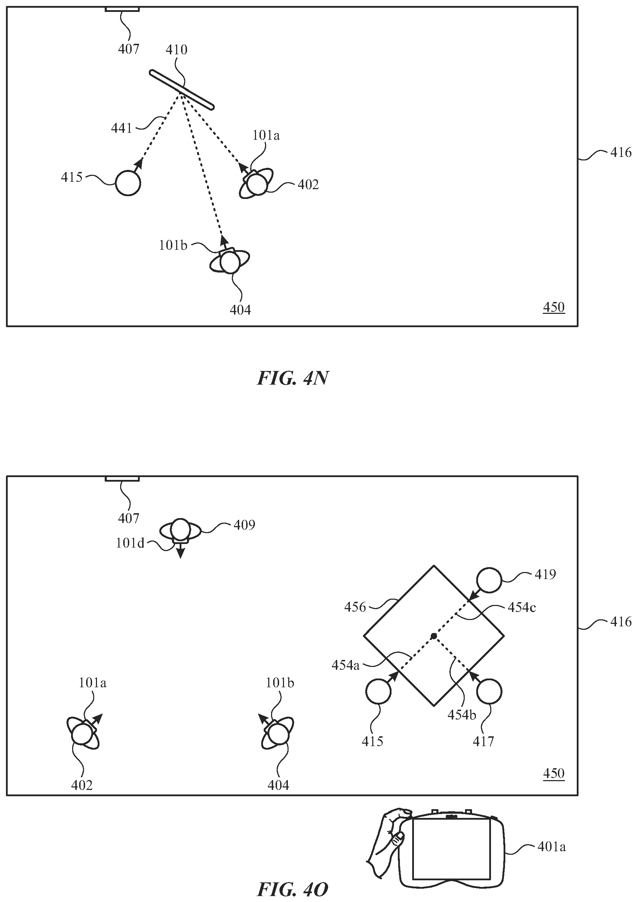

From FIG. 4M to FIG. 4N, the first electronic device 101a determines the preferred placement location for the shared user interface 410, ceases presenting the shared user interface 410 at its illustrated location in the shared three-dimensional environment 450 in FIG. 4M and presents the shared user interface 410 at the preferred placement location, which is the illustrated placement location of the shared user interface 410 in the shared three-dimensional environment 450 in FIG. 4N. Additionally, the first electronic device 101a ceases presentation of the avatar 415 from its illustrated location in the shared three-dimensional environment 450 in FIG. 4M to its illustrated location in the shared three-dimensional environment 450 in FIG. 4N. Additionally, the avatar 415 and the shared user interface 410 have the first spatial arrangement 441 relative to each other in FIG. 4N, as in FIG. 4M. Note that, though the shared user interface 410 at the preferred placement location and the avatar 415 at the illustrated location in FIG. 4N have orientations relative to the shared three-dimensional environment 450 that are different from their respective orientations relative to the shared three-dimensional environment 450 in FIG. 4M, the shared user interface 410 at the preferred placement location and the avatar 415 at the illustrated location in FIG. 4N have the first spatial arrangement 441 relative to each other. Accordingly, in response to resetting inputs from collocated users, the first electronic device 101a moves the shared user interface 410 to the preferred placement location and the avatar 415 in a manner that maintains the spatial arrangement between the shared user interface 410 and the avatar 415 as the first spatial arrangement 441.

FIGs. 4O through 4R illustrate an example of the first electronic device 101a detecting and responding to user input from the first user 402 corresponding to a request to reset the spatial arrangement of the virtual content of the multi-user communication session in the shared three-dimensional environment 450, according to some examples.

In FIG. 4O, the multi-user communication session includes the first user 402, the second user 404, the third user who is represented in the shared three-dimensional environment 450 as the avatar 415, the fourth user 409, a fifth user of a fifth electronic device, and a sixth user of a sixth electronic device. The fifth user of the fifth electronic device and the sixth user of the sixth electronic device are not located in the physical environment 416 (e.g., are not collocated in the physical environment 416 with the first user 402, the second user 404, and/or fourth user 409), and the fifth user of the fifth electronic device is represented in the shared three-dimensional environment 450 as an avatar 417 and the sixth user of the sixth electronic device is represented in the shared three-dimensional environment 450 as an avatar 419, as shown. The avatars 417/419 optionally share one or more characteristics described with reference to the avatar 415. In FIG. 4O, the multi-user communication session includes shared user interface 456, which is a horizontally-oriented user interface, such as illustrated and described with reference to the shared virtual object 310 of FIG. 3. As such, in FIG. 4O, the first electronic device 101a concurrently presents avatars 415/417/419 and the shared user interface 456 at their illustrated locations in the shared three-dimensional environment 450. Additionally, in FIG. 4O, the spatial arrangement between the shared user interface 456 (e.g., a reference on the shared user interface 456, such as the center of the shared user interface 456) and the avatar 415 relative to each other is a spatial arrangement 454a; the spatial arrangement between the shared user interface 456 and the avatar 417 relative to each other is a spatial arrangement 454b; the spatial arrangement between the shared user interface 456 and the avatar 419 relative to each other is a spatial arrangement 454c.

In FIG. 4O, the first electronic device 101a detects an input corresponding to a request to reset a spatial arrangement of the virtual content of the multi-user communication session. In some examples, the first electronic device 101a detects a press of a button of the first electronic device 101a provided by a hand of the first user 402, such as illustrated with glyph 401a in FIG. 4O, and the first electronic device 101a optionally corresponds detection of that input to the request to reset the spatial arrangement of the shared virtual content of the multi-user communication session in the shared three-dimensional environment 450. Additionally or alternatively, in some examples, the user input is a touch input (e.g., on a touch screen), a press and/or rotation of a physical button, an air gesture (e.g., an air pinch gesture or another gesture), a verbal request (e.g., detected using a microphone), a gaze direction (e.g., detected by an eye-tracking camera(s)), or another type of user input.

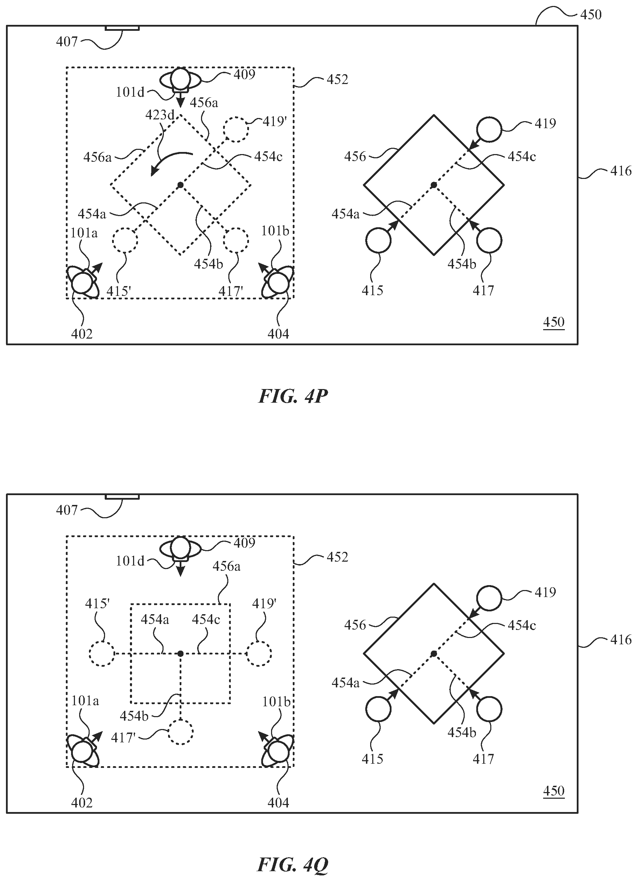

In response to detecting the user input in FIG. 4O, the first electronic device 101a determines a preferred placement location for the shared user interface 456. In some examples, as illustrated in FIG. 4P, determining the preferred placement location for the shared user interface 456 includes simulating a bounding box 452 (e.g., rectangle) around the locations of the first user 402, the second user 404, and the fourth user 409 to determine whether the shared user interface 456 can fit inside of the bounding box 452 (e.g., fit with the center of the shared user interface 456 being vertically aligned with the center of the bounding box 452 in the shared three-dimensional environment 450). The sides of the bounding box 452 optionally intersect the locations of the first user 402, the second user 404, and the fourth user 409. The first electronic device 101a simulates placement of the shared user interface 456 inside of the bounding box 452, as shown with the user interface 456a which has the same dimensions as the shared user interface 456, to determine whether the shared user interface 456 (e.g., the dimensions of the shared user interface 456 in FIG. 4O) fits within the bounding box 452. As shown in FIG. 4P, the user interface 456a fits inside the bounding box 452, so the shared user interface 456 would fit inside the bounding box 452. Additionally, as shown in FIG. 4P, the first electronic device 101a simulates the avatars 415'/417'/419', which correspond to the avatars 415/417/419, and the spatial arrangements between the avatars 415'/417'/419' and the user interface 456a inside the bounding box 452 are equal to the spatial arrangements between the avatars 415/417/419 and the shared user interface 456 (e.g., are equal to the spatial arrangement 454a/454b/454c) in FIG. 4O, respectively. For example, as described above, when the event of FIG. 4O is detected, the spatial arrangement between the shared user interface 456 and the avatar 415 relative to each other is a spatial arrangement 454a; the spatial arrangement between the shared user interface 456 and the avatar 417 relative to each other is a spatial arrangement 454b; the spatial arrangement between the shared user interface 456 and the avatar 419 relative to each other is a spatial arrangement 454c. In FIG. 4P, the user interface 456a and simulated avatars 415'/417'/419', which, like the simulated bounding box 452 and the user interface 456a, are not being presented in the shared three-dimensional environment 450, have those same spatial arrangements 454a/454b/454c relative to each other, respectively. Additionally, the first electronic device 101a determines a preferred orientation of the user interface 456a inside the bounding box 452. In some examples, determining the preferred orientation of the user interface 456a inside the bounding box 452 includes rotating, as indicated with the arrow 423d, the user interface 456a, while maintaining the spatial arrangements between the simulated avatars 415'/417'/419' and the user interface 456a in the bounding box 452, to an orientation where lines extending from the center of the user interface 456a in the bounding box 452 and to the locations of the first user 402, the second user 404, and the fourth user 409, do not intersect lines extending from the center of the user interface 456a in the bounding box 452 and to the locations of the simulated avatars 415'/417'/419' in the bounding box 452 (e.g., so that the avatars 415/417/419, when presented according to the locations of the simulated avatars 415'/417'/419, do not block/obscure the shared user interface 456, when presented according to the location of the user interface 456a, from the viewpoints of the first user 402, the second user 404, and the fourth user 409 in FIG. 4P).

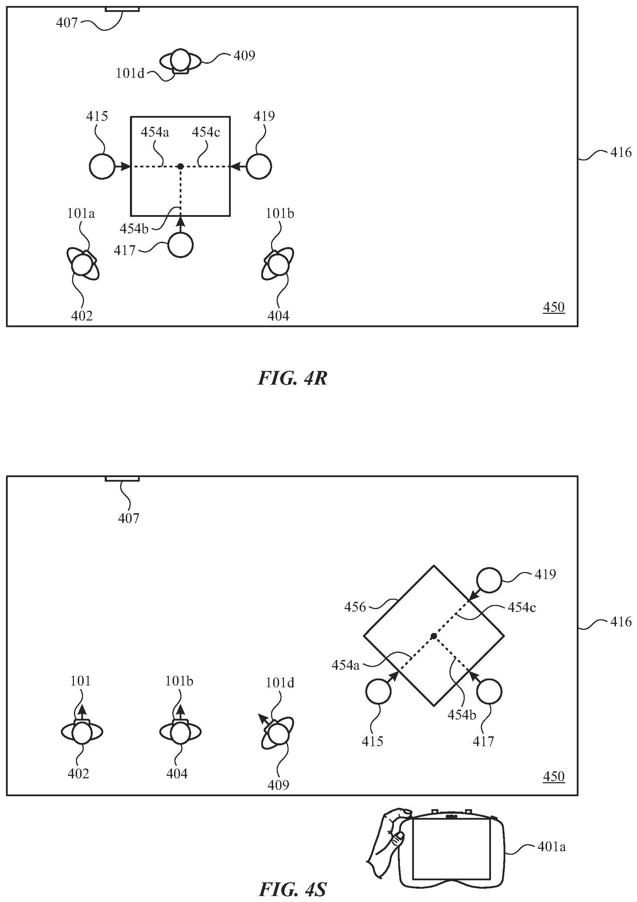

From FIG. 4P to FIG. 4Q, the first electronic device 101a rotates the user interface 456a inside the bounding box 452 until the preferred orientation for the user interface 456a inside the bounding box 452 is determined, and in FIG. 4Q the user interface 456a has the preferred orientation. After determining the preferred orientation for the user interface 456a inside the bounding box 452, the first electronic device 101a ceases presenting the avatars 415/417/419 and the shared user interface 456 at their locations in the shared three-dimensional environment 450 in FIG. 4R (which the same as their locations in FIG. 4O) and presents the avatars 415/417/419 and the shared user interface 456 at their locations in the shared three-dimensional environment 450 in FIG. 4R, where in FIG. 4R, the shared user interface 456 and the avatars 415/417/419 have the spatial arrangements 454a/454b/454c relative to each other (e.g., the same spatial arrangements that they had when the event of FIG. 4O was detected). For example, were the avatar 415 pointing to a first side (or to a first portion of content) of the shared user interface 456 in FIG. 4O when the event of FIG. 4O is detected, the avatar 415 and the shared user interface 456 would be presented at the illustrated location in FIG. 4Q with the hand of the avatar 415 pointing to the first side (or to the first portion of the content) of the shared user interface 456, thus preserving the spatial arrangement between the avatar 415 and the shared user interface 456 relative to each other in shared three-dimensional environment 450, though being presented at different locations in the shared three-dimensional environment 450.

FIGs. 4S through 4W illustrate an example of the first electronic device 101a detecting and responding to user input from the first user 402 that corresponds to a request to reset the spatial arrangement of the virtual content of the multi-user communication session in the shared three-dimensional environment 450, according to some examples.

In FIG. 4S, the multi-user communication session includes the first user 402, the second user 404, the fourth user 409, and the third, fifth, and sixth users who are represented as avatars 415/417/419 in the shared three-dimensional environment 450 as in FIGs. 4O through 4R. In FIG. 4S, the multi-user communication session includes the shared user interface 456 as in FIGs. 4O through 4R. In FIG. 4S, the first electronic device 101a concurrently presents avatars 415/417/419 and the shared user interface 456 at their illustrated locations in the shared three-dimensional environment 450.

In FIG. 4S, the first electronic device 101a detects an input corresponding to a request to reset a spatial arrangement of the virtual content of the multi-user communication session. In some examples, the first electronic device 101a detects a press of a button of the first electronic device 101a provided by a hand of the first user 402, such as illustrated with glyph 401a in FIG. 4S, and the first electronic device 101a optionally corresponds detection of that input to the request to reset the spatial arrangement of the shared virtual content of the multi-user communication session in the shared three-dimensional environment 450. Additionally or alternatively, in some examples, the user input is a touch input (e.g., on a touch screen), a press and/or rotation of a physical button, an air gesture (e.g., an air pinch gesture or another gesture), a verbal request (e.g., detected using a microphone), a gaze direction (e.g., detected by an eye-tracking camera(s)), or another type of user input.

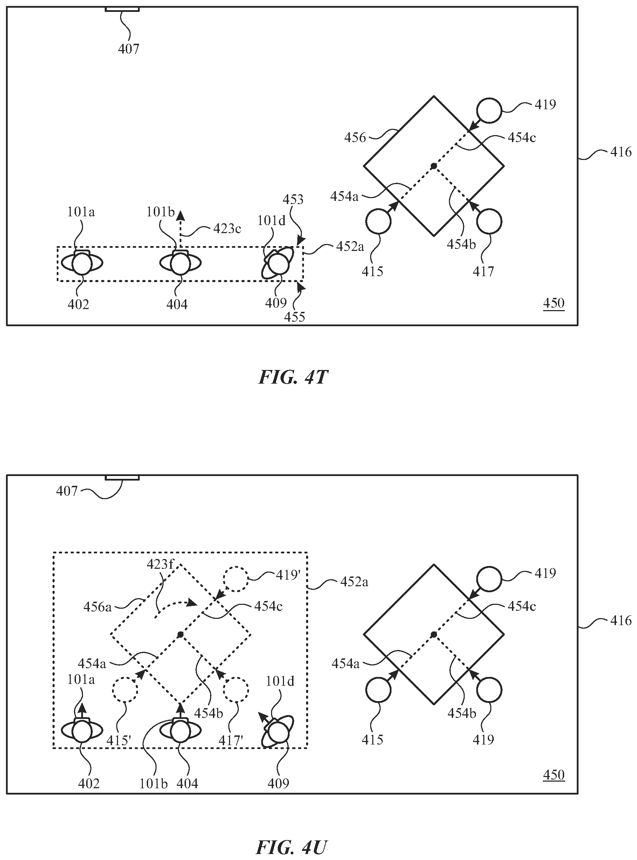

In response to detecting the user input in FIG. 4S, the first electronic device 101a determines a preferred placement location for the shared user interface 456. In some examples, determining the preferred placement location for the shared user interface 456 includes simulating a bounding box 452a around the locations of the first user 402, the second user 404, and the fourth user 409 to determine whether the preferred placement location for the shared user interface 456 can fit inside of the bounding box 452a (e.g., fit with the center of the shared user interface 456 being vertically aligned with the center of the bounding box 452a in the shared three-dimensional environment 450), as shown in FIG. 4T. For example, the first electronic device 101a determines whether the shared user interface 456 (e.g., the dimensions of the shared user interface 456 in FIG. 4T, which is the same as the dimensions of the shared user interface 456 in FIG. 4S) fits within the bounding box 452a of FIG. 4T (e.g., without overlapping a location of the first user 402, the second user 404, and/or fourth user 409 who are also in the bounding box 452a). As shown in FIG. 4T, the shared user interface 456 would not fit inside the bounding box 452a. For example, the area of the bounding box 452a is less than the area of the shared user interface 456 in FIG. 4T.

In some examples, the first electronic device 101a changes the aspect ratio of the bounding box 452a to determine the preferred placement location for the shared user interface 456. In some examples, changing the aspect ratio includes increasing a length dimension of the bounding box 452a, as shown with the arrow 423e in FIG. 4T, until the aspect ratio of the bounding box is a predetermined aspect ratio, such as a ratio of one or another predetermined aspect ratio. For example, the first electronic device 101a moves (e.g., projects out) the side 453 of the bounding box 452a away from the side of 455 of the bounding box 452a (e.g., without moving a corresponding location of the side 455 of the bounding box 453) until the aspect ratio of the bounding box 452a is equal to one (e.g., the bounding box 452a forms a square). From FIG. 4T to FIG. 4U, the first electronic device 101a has changed the aspect ratio of the bounding box 452a to the predetermined aspect ratio as described above, and the first electronic device 101a determines that the shared user interface 456 would fit inside the updated bounding box 452a (e.g., fit with the center of the shared user interface 456 being vertically aligned with the center of the bounding box 452a in the shared three-dimensional environment 450), as illustrated with the user interface 456a fitting inside the updated bounding box 452a in FIG. 4U. In FIG. 4U, the user interface 456a and simulated avatars 415'/417'/419', which, like the simulated bounding box 452a and the user interface 456a are not being presented in the shared three-dimensional environment 450, have those same spatial arrangements 454a/454b/454c relative to each other, respectively. Additionally, the first electronic device 101a determines a preferred orientation of the shared user interface 456a inside the bounding box 452a. In some examples, determining the preferred orientation of the shared user interface 456a inside the bounding box 452a includes rotating, as indicated with the arrow 423f, the user interface 456a, while maintaining the spatial arrangements between the simulated avatars 415'/417'/419' and the user interface 456a in the bounding box 452a, to an orientation where lines extending from the center of the user interface 456a in the bounding box 452a and to the locations of the first user 402, the second user 404, and the fourth user 409, do not intersect lines extending from the center of the user interface 456a in the bounding box 452a and to the locations of the simulated avatars 415'/417'/419' in the bounding box 452a (e.g., so that the avatars 415/417/419, when presented according to the locations of the simulated avatars 415'/417'/419', do not block/obscure the shared user interface 456, when presented according to the location of the user interface 456a, from the viewpoints of the first user 402, the second user 404, and the fourth user 409 in FIG. 4U), as similarly described above.

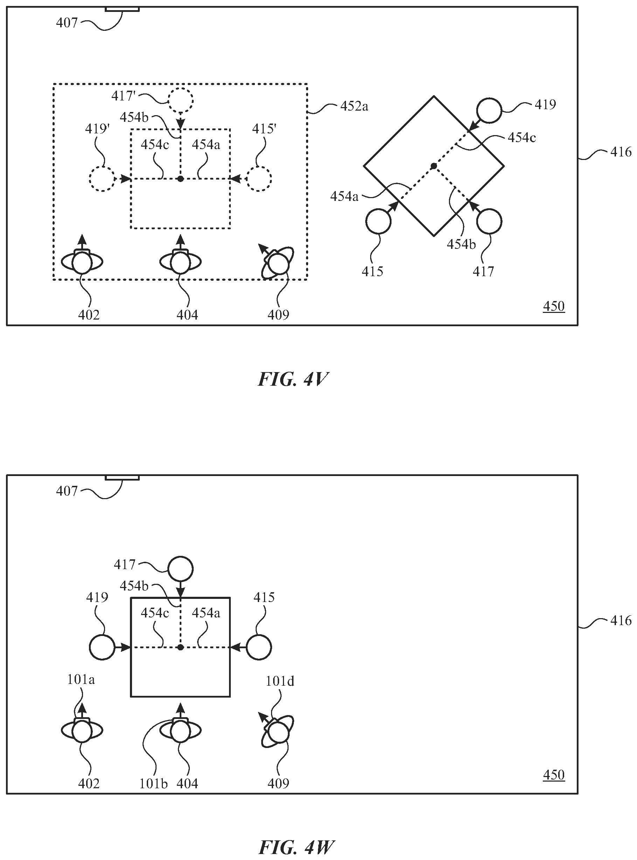

From FIG. 4U to FIG. 4V, the first electronic device 101a rotates the user interface 456a inside the bounding box 452a until the preferred orientation for the user interface 456a inside the bounding box 452a is determined, and in FIG. 4V, the user interface 456a has the preferred orientation. After determining the preferred orientation for the user interface 456a inside the bounding box 452, the first electronic device 101a ceases presenting the avatars 415/417/419 and the shared user interface 456 at their locations in the shared three-dimensional environment 450 in FIG. 4U (which are the same as their locations in FIG. 4S) and presents the avatars 415/417/419 and the shared user interface 456 at their locations in the shared three-dimensional environment in FIG. 4W, where in FIG. 4W, the shared user interface 456 and the avatars 415/417/419 have the spatial arrangements 454a/454b/454c relative to each other (e.g., the same spatial arrangements that they had when the event of FIG. 4S was detected). For example, were the avatar 415 pointing to a first portion of content on the shared user interface 456 (e.g., a first side of the shared user interface 456, such that hand of the avatar 415 is at a first position relative to the first portion of content on the shared user interface 456 in FIG. 4S when the event of FIG. 4S is detected, the avatar 415 and the shared user interface 456 would be presented at the illustrated location in FIG. 4W with the hand of the avatar 415 pointing to the first portion of content of the shared user interface 456 in FIG. 4W, such that the hand of the avatar 415 is at the first position relative to the first portion of content on the shared user interface 456 in FIG. 4W, thus preserving the spatial arrangement between the avatar 415 and the shared user interface 456 relative to each other in shared three-dimensional environment 450, though being presented at different locations in the shared three-dimensional environment 450.

It should be noted that the operations performed by the first electronic device 101a in response to the user input of FIGs. 4O and 4S could additionally or alternatively be performed by the second electronic device 101b and/or the fourth electronic device 101d, in response to the second electronic device 101b and/or the fourth electronic device 101d detecting an indication that the first electronic device 101a has detected the user input of FIGs. 4O and 4S.

It is understood that the examples shown and described herein are merely exemplary and that additional and/or alternative elements may be provided within the three-dimensional environment for determining new placements for shared virtual content of a multi-user communication session in response to events that correspond to a request to reset the spatial arrangement of the virtual content of the multi-user communication session. It should be understood that the appearance, shape, form, and size of each of the various user interface elements and objects shown and described herein are exemplary and that alternative appearances, shapes, forms and/or sizes may be provided. For example, the virtual objects representative of application windows (e.g., shared user interface 410 and shared user interface 456) may be provided in alternative shapes than those shown, such as a rectangular shape, circular shape, triangular shape, etc. Additionally or alternatively, in some examples, the various options, user interface elements, control elements, etc. described herein may be selected and/or manipulated via user input received via one or more input devices in communication with the electronic device (or electronic devices). For example, selection input may be received via physical input devices, such as a mouse, trackpad, keyboard, etc. in communication with the electronic devices (or electronic devices), or a physical button integrated with the electronic devices (or electronic devices).

FIG. 5 illustrates a flow chart illustrating an example process 500 for determining placement locations in a three-dimensional environment for virtual content of a multi-user communication session that includes a group of collocated users and one or more non-collocated users in response to detecting an event corresponding to a request to reset a spatial arrangement of the virtual content of the multi-user communication session, where the event is based on user input detected at an electronic device of a non-collocated user, according to some examples of the disclosure. In some examples, process 500 is performed at a first electronic device in communication with one or more first displays and one or more first input devices, such as the first electronic device 101a in FIGs. 4A through 4W. In some examples, process 500 is performed while a multi-user communication session is established that includes a first user of the first electronic device, a second user of a second electronic device, and a third user of a third electronic device, where the first user is collocated with the second user in a physical environment, and where the third user is not collocated with the second user and the first user in the physical environment, such as the multi-user communication session that includes the first user 402 of the first electronic device 101a, the second user 404 of the second electronic device 101b, and the third user of the third electronic device described with reference to FIG. 4C. In some examples, the first electronic device presents (502), via the one or more first displays, virtual content of the multi-user communication session in a three-dimensional environment, including, concurrently presenting a shared user interface at a first location in the three-dimensional environment and a visual representation of the third user at a second location, different from the first location, in the three-dimensional environment, such as the first electronic device 101a concurrently presenting the shared user interface 410 and the avatar 415 at their illustrated locations in the shared three-dimensional environment 450 in FIG. 4C. In some examples, while presenting the virtual content of the multi-user communication session in the three-dimensional environment, the first electronic device 101a detects (504) an event corresponding to a request to reset a spatial arrangement of the virtual content of the multi-user communication session, where the request is initiated based on user input detected at the third electronic device, such as described with reference to the event of FIG. 4C. In some examples, in response to detecting the event, the first electronic device 101a initiates (506) a process to reset the spatial arrangement of the virtual content of the multi-user communication session, including: 1) maintaining presentation, via the one or more first displays, of the shared user interface at the first location, such as shown with the maintaining of presentation of the shared user interface 410 at its illustrated location in the shared three-dimensional environment 450 from FIG. 4C to FIG. 4C-1 to FIG. 450; 2) determining a spatial arrangement for the first user, the second user, and the shared user interface at the first location when the event is detected, such as the spatial arrangement 443 and the spatial arrangement 445 in FIG. 4C-1; and 3) based on the determined spatial arrangement for the first user, the second user, and the shared user interface at the first location, presenting, via the one or more first displays, the visual representation of the third user at a respective location in the three-dimensional environment, where the respective location is associated with a respective seat of a plurality of seats (e.g., the respective location is on the arc 440 in FIG. 4B) within a spatial template for the virtual content of the multi-user communication session, such as presenting the avatar 415 at the original placement location 432 in FIG. 4D.

It is understood that process 500 is an example and that more, fewer, or different operations can be performed in the same or in a different order. Additionally, the operations in process 500 described above are, optionally, implemented by running one or more functional modules in an information processing apparatus such as general-purpose processors (e.g., as described with respect to FIGs. 2A-2C) or application specific chips, and/or by other components of FIGs. 2A-2C.

Therefore, according to the above, some examples of the disclosure are directed to a method, including, at a first electronic device in communication with one or more first displays and one or more first input devices, while a multi-user communication session is established that includes a first user of the first electronic device, a second user of a second electronic device, and a third user of a third electronic device, where the first user is collocated with the second user in a physical environment, and where the third user is not collocated with the second user and the first user in the physical environment, presenting, via the one or more first displays, virtual content of the multi-user communication session in a three-dimensional environment, including, concurrently presenting, a shared user interface at a first location in the three-dimensional environment, and a visual representation of the third user at a second location, different from the first location, in the three-dimensional environment. The method includes, while presenting the virtual content of the multi-user communication session in the three-dimensional environment, detecting an event corresponding to a request to reset a spatial arrangement of the virtual content of the multi-user communication session, wherein the request is initiated based on user input detected at the third electronic device. The method includes in response to detecting the event, initiating a process to reset the spatial arrangement of the virtual content of the multi-user communication session, including, maintaining presentation, via the one or more first displays, of the shared user interface at the first location, determining a spatial arrangement for the first user, the second user, and the shared user interface at the first location when the event is detected, and based on the determined spatial arrangement for the first user, the second user, and the shared user interface at the first location, presenting, via the one or more first displays, the visual representation of the third user at a respective location in the three-dimensional environment, wherein the respective location is associated with a respective seat of a plurality of seats within a spatial template for the virtual content of the multi-user communication session.

Additionally or alternatively, in some examples, prior to detecting the event, a location of the visual representation of the third user in the three-dimensional environment is a third location, different from the second location, that is based on a first spatial arrangement for the first user, the second user, and the shared user interface at the first location and is associated with a first seat of the plurality of seats within the spatial template for the virtual content of the multi-user communication session, and in response to detecting the event, the process includes determining the respective seat of the plurality of seats within the spatial template based on the determined spatial arrangement for the first user, the second user, and the shared user interface at the first location. Additionally or alternatively, in some examples, in accordance with a determination that a distance between the third location and a location of the first user in the three-dimensional environment is less than a threshold distance and/or that a distance between the third location and a location of the second user in the three-dimensional environment is less than the threshold distance when the event is detected, the respective seat of the plurality of seats is different from the first seat of the plurality of seats, and in accordance with a determination that the distance between the third location and the location of the first user in the three-dimensional environment is not less than the threshold distance and that the distance between the third location and the location of the second user in the three-dimensional environment is not less than the threshold distance when the event is detected, the respective seat of the plurality of seats is the first seat of the plurality of seats. Additionally or alternatively, in some examples, the respective location is the third location. Additionally or alternatively, in some examples, the respective location is different from the third location. Additionally or alternatively, in some examples, in an order of seats of the plurality of seats within the spatial template, the respective seat is adjacent to the first seat in the plurality of seats. Additionally or alternatively, in some examples, in accordance with a determination that a plurality of users, including the first user and the second user, in the multi-user communication session that is collocated in the physical environment is within threshold distances of a number of seats of the plurality of seats, including the first seat and seats adjacent to the first seat, respectively, in an order of seats of the plurality of seats within the spatial template, the respective seat is not adjacent to the first seat in the plurality of seats. Additionally or alternatively, in some examples, in accordance with a determination that the number is a first number in the order of seats of the plurality of seats, the respective seat is a first respective number of seats away from the first seat, and in accordance with a determination that that the number is a second number, different from the first number, in the order of seats of the plurality of seats, the respective seat is a second respective number, different from the first respective number, of seats away from the first seat.

Additionally or alternatively, in some examples, presenting the visual representation of the third user at the second location comprises displaying, via the one or more first displays, the visual representation of the third user at the second location in the three-dimensional environment, presenting the visual representation of the third user at the respective location includes displaying, via the one or more first displays, the visual representation of the third user at the respective location in the three-dimensional environment, and the method includes, in response to detecting the event, fading out, via the one or more first displays, the visual representation of the third user at the second location, and fading in, via the one or more first displays, the visual representation of the third user at the respective location.

Additionally or alternatively, in some examples, when the event is detected, the visual representation of the third user has a first orientation in the three-dimensional environment at the second location relative to a viewpoint of the first electronic device, and presenting, via the one or more first displays, the visual representation of the third user at the respective location includes presenting the visual representation of the third user having a second orientation, different from the first orientation, relative to the viewpoint of the first electronic device in the three-dimensional environment.

Additionally or alternatively, in some examples, the visual representation of the third user is a three-dimensional representation of the third user. Additionally or alternatively, in some examples, the first electronic device includes a head mounted display system, the second electronic device includes a head mounted display system, and the third electronic device includes a head mounted display system.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

FIG. 6 illustrates a flow diagram illustrating an example process 600 for determining placement locations in a three-dimensional environment for virtual content of a multi-user communication session that includes a group of collocated users and one or more non-collocated users in response to detecting an event corresponding to a request to reset a spatial arrangement of the virtual content of the multi-user communication session, where the event is based on user input detected at an electronic device of a collocated user, according to some examples of the disclosure.

In some examples, process 600 is performed at a first electronic device in communication with one or more first displays and one or more first input devices, such as the first electronic device 101a in FIGs. 4A through 4W. In some examples, process 600 is performed while a multi-user communication session is established that includes a first user of the first electronic device, a second user of a second electronic device, and a third user of a third electronic device, where the first user is collocated with the second user in a physical environment, and where the third user is not collocated with the second user and the first user in the physical environment, such as the multi-user communication session that includes the first user 402 of the first electronic device 101a, the second user 404 of the second electronic device 101b, and the third user of the third electronic device described with reference to FIG. 4I. In some examples, the first electronic device 101a presents (602) via the one or more first displays, virtual content of the multi-user communication session in a three-dimensional environment, including, concurrently presenting a shared user interface at a first location in the three-dimensional environment, such as the shared user interface 410 in FIG. 4I, and a visual representation of the third user at a second location, different from the first location, in the three-dimensional environment, where the visual representation of the third user at the second location and the shared user interface at the first location have a first spatial arrangement relative to each other in the three-dimensional environment, such as the first electronic device 101a concurrently presenting the shared user interface 410 and the avatar 415 at their illustrated locations with the spatial arrangement between them being the first spatial arrangement 441 in FIG. 4I. In some examples, while presenting the virtual content of the multi-user communication session, the first electronic device 101a detects (604), via the one or more first input devices, an input corresponding to a request to reset a spatial arrangement of the virtual content of the multi-user communication session, such as described with reference to the glyph 401a in FIG. 4I. In some examples, in response to detecting the input, the first electronic device 101a initiates (606) a process to reset the spatial arrangement of the virtual content of the multi-user communication session, including, determining an updated placement location for the shared user interface in the three-dimensional environment, such as described with reference to determining the placement location for the shared user interface 410 using the simulated user interface 410a from FIG. 4I to FIG. 4J to FIG. 4K. Initiating the process to reset the spatial arrangement of the virtual content of the multi-user communication session process also includes concurrently presenting, via the one or more first displays, the shared user interface at the updated placement location for the shared user interface in the three-dimensional environment, where the updated placement location for the shared user interface is different from the first location in the three-dimensional environment, such as the first electronic device 101a presenting the shared user interface 410 at the illustrated location in the shared three-dimensional environment in FIG. 4K, and the visual representation of the third user at a third location in the three-dimensional environment, such as the first electronic device 101a presenting the avatar 415 at its illustrated location in the shared three-dimensional environment 450 in FIG. 4K. The visual representation of the third user at the third location and the shared user interface at the updated placement location for the shared user interface have the first spatial arrangement relative to each other in the three-dimensional environment, such as shown with the spatial arrangement between the avatar 415 and the shared user interface 410 in FIG. 4K being the first spatial arrangement 441, just like the spatial arrangement between the avatar 415 and the shared user interface 410 in FIG. 4I is the first spatial arrangement 441.

It is understood that process 600 is an example and that more, fewer, or different operations can be performed in the same or in a different order. Additionally, the operations in process 600 described above are, optionally, implemented by running one or more functional modules in an information processing apparatus such as general-purpose processors (e.g., as described with respect to FIGs. 2A-2C) or application specific chips, and/or by other components of FIGs. 2A-2C.

Therefore, according to the above, some examples of the disclosure are directed to a method, including, at a first electronic device in communication with one or more first displays and one or more first input devices, while a multi-user communication session is established that includes a first user of the first electronic device, a second user of a second electronic device, and a third user of a third electronic device, where the first user is collocated with the second user in a physical environment, and where the third user is not collocated with the second user and the first user in the physical environment, presenting, via the one or more first displays, virtual content of the multi-user communication session in a three-dimensional environment, including, concurrently presenting, a shared user interface at a first location in the three-dimensional environment and a visual representation of the third user at a second location, different from the first location, in the three-dimensional environment, where the visual representation of the third user at the second location and the shared user interface at the first location have a first spatial arrangement relative to each other in the three-dimensional environment. The method includes while presenting the virtual content of the multi-user communication session, detecting, via the one or more first input devices, an input corresponding to a request to reset a spatial arrangement of the virtual content of the multi-user communication session. The method includes, in response to detecting the input, initiating a process to reset the spatial arrangement of the virtual content of the multi-user communication session, including, determining an updated placement location for the shared user interface in the three-dimensional environment, and concurrently presenting, via the one or more first displays, the shared user interface at the updated placement location for the shared user interface in the three-dimensional environment, where the updated placement location for the shared user interface is different from the first location in the three-dimensional environment, and the visual representation of the third user at a third location in the three-dimensional environment, where the visual representation of the third user at the third location and the shared user interface at the updated placement location for the shared user interface have the first spatial arrangement relative to each other in the three-dimensional environment.

Additionally or alternatively, in some examples, the shared user interface has a vertical orientation in the three-dimensional environment, when the event is detected (e.g., when the input corresponding to the request to reset the spatial arrangement of the virtual content of the multi-user communication session is detected), a location of the first user is a first respective location in the three-dimensional environment and a viewpoint of the first electronic device at the first respective location is a first viewpoint of the first electronic device, and initiating the process to reset the spatial arrangement of the virtual content of the multi-user communication session includes simulating placement of the shared user interface at a location in the three-dimensional environment that is based on the first viewpoint of the first electronic device. Additionally or alternatively, in some examples, when the event is detected (e.g., when the input corresponding to the request to reset the spatial arrangement of the virtual content of the multi-user communication session is detected), a location of the second user is a second respective location in the three-dimensional environment, wherein determining the updated placement location for the shared user interface in the three-dimensional environment includes performing an iterative process that includes simulating placement of the shared user interface at a plurality of locations in the three-dimensional environment, including the location in the three-dimensional environment, to determine, a first angle between a line extending from the first respective location to a center of the shared user interface and a normal of the shared user interface at each location of the plurality of locations, and a second angle between a line extending from the second respective location to the center of the shared user interface and the normal of the shared user interface at each location of the plurality of locations, where the updated placement location for the shared user interface in the three-dimensional environment is a location of the plurality of locations. Additionally or alternatively, in some examples, an angle between a line extending from the second location of the visual representation of the third user to a center of the shared user interface at the first location in three-dimensional environment and the normal of the shared user interface at the first location is a respective angle, and wherein the updated placement location for the shared user interface in the three-dimensional environment is a location of the plurality of locations where the first angle and the second angle are different from the respective angle. Additionally or alternatively, in some examples, the plurality of locations includes a first placement location that is a first distance in the three-dimensional environment relative to the viewpoint of the first electronic device and a second placement location, different from the first placement location, that is a second distance, different from the first distance, in the three-dimensional environment relative to the first viewpoint of the first electronic device. Additionally or alternatively, in some examples, simulating placement of the shared user interface at each of the plurality of locations includes simulating display of the shared user interface having different orientations about an axis associated with the shared user interface at each of the plurality of locations. Additionally or alternatively, in some examples, the plurality of locations includes locations at different lateral positions in the three-dimensional environment relative to the first viewpoint of the first electronic device.

Additionally or alternatively, in some examples, the shared user interface has a horizontal orientation in the three-dimensional environment, the multi-user communication session includes a fourth user of a fourth electronic device who is collocated in the physical environment with the first user and the second user, when the event is detected, the fourth user is at a location in the three-dimensional environment that is in between a location of the first user and a location of the second user in the three-dimensional environment, and determining the updated placement location for the shared user interface in the three-dimensional environment includes, simulating a first bounding box in the three-dimensional environment that extends unto (e.g., surrounds or encloses) to the location of the first user, the location of the second user, and the location of the fourth user in the three-dimensional environment, wherein the updated placement location for the shared user interface in the three-dimensional environment is based on an aspect ratio of the simulated first bounding box.

Additionally or alternatively, in some examples, in accordance with a determination that the aspect ratio of the simulated first bounding box is a predetermined aspect ratio, the updated placement location is a first respective location that is located inside the simulated first bounding box in the three-dimensional environment, and in accordance with a determination that the aspect ratio of the simulated first bounding box is not the predetermined aspect ratio, the updated placement location is a second respective location, different from the first respective location, where the second respective location is located outside of the simulated first bounding box.

Additionally or alternatively, in some examples, the second respective location is determined by simulating a second bounding box that extends unto (e.g., surrounds or encloses) the location of the first user and the location of the second user, and that extends farther than the location of the fourth user in the three-dimensional environment, where the aspect ratio of the simulated second bounding box (e.g., object) is the predetermined aspect ratio and determining the second respective location based on the simulated second bounding box, where the second respective location is located outside of the simulated first bounding box (e.g., object) in the three-dimensional environment and is located inside of the simulated second bounding box in the three-dimensional environment. Additionally or alternatively, in some examples, when the visual representation of the third user at the second location and the shared user interface at the first location have the first spatial arrangement relative to each other in the three-dimensional environment, the shared user interface at the first location has a first orientation relative to the three-dimensional environment, when the visual representation of the third user at the third location and the shared user interface at the updated placement location for the shared user interface location have the first spatial arrangement relative to each other in the three-dimensional environment, the shared user interface at the updated placement location for the shared user interface has a respective orientation relative to the three-dimensional environment that is determined by, performing an iterative process that includes simulating display of the shared user interface in a plurality of orientations at the updated placement location for the shared user interface to determine, a second spatial arrangement that the first user and the shared user interface have relative to each other in the three-dimensional environment in each orientation of the plurality of orientations at the updated placement location for the shared user interface and a third spatial arrangement that the second user and the shared user interface have relative to each other in the three-dimensional environment in each orientation of the plurality of orientations at the updated placement location for the shared user interface, where the respective orientation of the shared user interface at the updated placement location for the shared user interface is an orientation of the plurality of orientations where the second spatial arrangement and the third spatial arrangement are different from the first spatial arrangement.

Additionally or alternatively, in some examples, in accordance with a determination that, when the event is detected, a position of the first electronic device is outside of a field of view of the second electronic device, the updated placement location for the shared user interface in the three-dimensional environment and the third location for the visual representation of the third user in the three-dimensional environment is determined independent of a location of the second user in the three-dimensional environment when the event is detected (e.g., when the input corresponding to the request to reset the spatial arrangement of the virtual content of the multi-user communication session is detected), and in accordance with a determination that, when the event is detected, the position of the first electronic device is within the field of view of the second electronic device, the updated placement location for the shared user interface in the three-dimensional environment and the third location for the visual representation of the third user in the three-dimensional environment is determined based on the location of the second user in the three-dimensional environment when the event is detected (e.g., when the input corresponding to the request to reset the spatial arrangement of the virtual content of the multi-user communication session is detected).

Additionally or alternatively, in some examples, presenting the visual representation of the third user at the second location comprises displaying, via the one or more first displays, the visual representation of the third user at the second location in the three-dimensional environment, presenting the visual representation of the third user at the updated placement location for the visual representation of the third user comprises displaying, via the one or more first displays, the visual representation of the third user at the updated placement location for the visual representation of the third user in the three-dimensional environment, and the method includes, in response to detecting the event (e.g., in response to detecting the input corresponding to the request to reset the spatial arrangement of the virtual content of the multi-user communication session), fading out, via the one or more first displays, the visual representation of the third user at the second location, and fading in, via the one or more first displays, the visual representation of the third user at the updated placement location for the visual representation of the third user.

Additionally or alternatively, in some examples, the first electronic device includes a head mounted display system, the second electronic device includes a head mounted display system, and the third electronic device includes a head mounted display system.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

It should be understood that the particular order in which the operations in process/method 500 and/or process/method 600 have been described is merely exemplary and is not intended to indicate that the described order is the only order in which the operations could be performed. One of ordinary skill in the art would recognize various ways to reorder the operations described herein. In some examples, aspects/operations of process/method 500 and/or process/method 600 may be interchanged, substituted, and/or added between these methods. For brevity, these details are not repeated here.

The present disclosure contemplates that in some examples, the data utilized can include personal information data that uniquely identifies or can be used to contact or locate a specific person. Such personal information data can include demographic data, content consumption activity, location-based data, telephone numbers, email addresses, TWITTER ID's, home addresses, data or records relating to a user's health or level of fitness (e.g., vital signs measurements, medication information, exercise information), date of birth, or any other identifying or personal information. Specifically, as described herein, one aspect of the present disclosure is tracking whether users of electronic devices are collocated in a physical environment.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data can be governed by federal and/or state laws, such as the Health Insurance Portability and Accountability Act (HIPAA); whereas health data in other countries can be subject to other regulations and policies and should be handled accordingly. Hence different privacy practices should be maintained for different personal data types in each country.

Despite the foregoing, the present disclosure also contemplates examples in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user can be notified upon initiating collection that their personal information data will be accessed and then reminded again just before personal information data is accessed by the one or more devices.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification can be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

The foregoing description, for purpose of explanation, has been described with reference to specific examples. However, the illustrative descriptions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

Exemplary methods, computer-readable storage media, systems, and electronic devices are set out in the following items:
1. A method comprising:
   at a first electronic device in communication with one or more first displays and one or more first input devices:
   while a multi-user communication session is established that includes a first user of the first electronic device, a second user of a second electronic device, and a third user of a third electronic device, wherein the first user is collocated with the second user in a physical environment, and wherein the third user is not collocated with the second user and the first user in the physical environment:
   presenting, via the one or more first displays, virtual content of the multi-user communication session in a three-dimensional environment, including, concurrently presenting:
      a shared user interface at a first location in the three-dimensional environment; and
      a visual representation of the third user at a second location, different from the first location, in the three-dimensional environment;
   while presenting the virtual content of the multi-user communication session in the three-dimensional environment, detecting an event corresponding to a request to reset a spatial arrangement of the virtual content of the multi-user communication session, wherein the request is initiated based on user input detected at the third electronic device; and
   in response to detecting the event, initiating a process to reset the spatial arrangement of the virtual content of the multi-user communication session, including:
      maintaining presentation, via the one or more first displays, of the shared user interface at the first location;
      determining a spatial arrangement for the first user, the second user, and the shared user interface at the first location when the event is detected; and
      based on the determined spatial arrangement for the first user, the second user, and the shared user interface at the first location, presenting, via the one or more first displays, the visual representation of the third user at a respective location in the three-dimensional environment, wherein the respective location is associated with a respective seat of a plurality of seats within a spatial template for the virtual content of the multi-user communication session.
2. The method of item 1, wherein:
   prior to detecting the event:
      a location of the visual representation of the third user in the three-dimensional environment is a third location, different from the second location, that is based on a first spatial arrangement for the first user, the second user, and the shared user interface at the first location and is associated with a first seat of the plurality of seats within the spatial template for the virtual content of the multi-user communication session; and
   in response to detecting the event, the process includes determining the respective seat of the plurality of seats within the spatial template based on the determined spatial arrangement for the first user, the second user, and the shared user interface at the first location.
3. The method of item 2, wherein:
   in accordance with a determination that a distance between the third location and a location of the first user in the three-dimensional environment is less than a threshold distance and that a distance between the third location and a location of the second user in the three-dimensional environment is less than the threshold distance when the event is detected, the respective seat of the plurality of seats is different from the first seat of the plurality of seats; and
   in accordance with a determination that the distance between the third location and the location of the first user in the three-dimensional environment is not less than the threshold distance and that the distance between the third location and the location of the second user in the three-dimensional environment is not less than the threshold distance when the event is detected, the respective seat of the plurality of seats is the first seat of the plurality of seats.
4. The method of any of items 2-3, wherein the respective location is the third location.
5. The method of any of items 2-3, wherein the respective location is different from the third location.
6. The method of item 5, wherein, in an order of seats of the plurality of seats within the spatial template, the respective seat is adjacent to the first seat in the plurality of seats.
7. The method of item 5 or 6, wherein, in accordance with a determination that a plurality of users, including the first user and the second user, in the multi-user communication session that is collocated in the physical environment is within threshold distances of a number of seats of the plurality of seats, including the first seat and seats adjacent to the first seat, respectively, in an order of seats of the plurality of seats within the spatial template, the respective seat is not adjacent to the first seat in the plurality of seats.
8. The method of item 7, wherein:
   in accordance with a determination that the number is a first number in the order of seats of the plurality of seats, the respective seat is a first respective number of seats away from the first seat; and
   in accordance with a determination that that the number is a second number, different from the first number, in the order of seats of the plurality of seats, the respective seat is a second respective number, different from the first respective number, of seats away from the first seat.
9. The method of any of items 1-8, wherein:
   presenting the visual representation of the third user at the second location comprises displaying, via the one or more first displays, the visual representation of the third user at the second location in the three-dimensional environment;
   presenting the visual representation of the third user at the respective location comprises displaying, via the one or more first displays, the visual representation of the third user at the respective location in the three-dimensional environment; and
   the method comprises, in response to detecting the event:
      fading out, via the one or more first displays, the visual representation of the third user at the second location; and
      fading in, via the one or more first displays, the visual representation of the third user at the respective location.
10. The method of any of items 1-9, wherein:
   when the event is detected, the visual representation of the third user has a first orientation in the three-dimensional environment at the second location relative to a viewpoint of the first electronic device; and
   presenting, via the one or more first displays, the visual representation of the third user at the respective location includes presenting the visual representation of the third user having a second orientation, different from the first orientation, relative to the viewpoint of the first electronic device in the three-dimensional environment.
11. The method of any of items 1-10, wherein the visual representation of the third user is a three-dimensional representation of the third user.
12. The method of any of items 1-11, wherein the first electronic device includes a head mounted display system, the second electronic device includes a head mounted display system, and the third electronic device includes a head mounted display system.
13. A first electronic device comprising:
   one or more processors; and
   memory, wherein the one or more processors are configured to execute one or more programs stored in the memory, the one or more programs including instructions for performing a method of any of items 1-12.
14. A non-transitory computer readable storage medium storing one or more programs, the one or more programs comprising instructions, which when executed by one or more processors of a first electronic device, cause the first electronic device to perform a method of any of items 1-12.
15. A first electronic device, comprising:
   one or more processors;
   memory; and
   means for performing a method of any of items 1-12.
16. An information processing apparatus for use in a first electronic device, the information processing apparatus comprising:
   means for performing a method of any of items 1-12.
17. A method comprising:
   at a first electronic device in communication with one or more first displays and one or more first input devices:
   while a multi-user communication session is established that includes a first user of the first electronic device, a second user of a second electronic device, and a third user of a third electronic device, wherein the first user is collocated with the second user in a physical environment, and wherein the third user is not collocated with the second user and the first user in the physical environment:
   presenting, via the one or more first displays, virtual content of the multi-user communication session in a three-dimensional environment, including, concurrently presenting:
      a shared user interface at a first location in the three-dimensional environment; and
      a visual representation of the third user at a second location, different from the first location, in the three-dimensional environment, wherein the visual representation of the third user at the second location and the shared user interface at the first location have a first spatial arrangement relative to each other in the three-dimensional environment;
   while presenting the virtual content of the multi-user communication session, detecting, via the one or more first input devices, an input corresponding to a request to reset a spatial arrangement of the virtual content of the multi-user communication session; and
   in response to detecting the input, initiating a process to reset the spatial arrangement of the virtual content of the multi-user communication session, including:
      determining an updated placement location for the shared user interface in the three-dimensional environment; and
      concurrently presenting, via the one or more first displays:
         the shared user interface at the updated placement location for the shared user interface in the three-dimensional environment, wherein the updated placement location for the shared user interface is different from the first location in the three-dimensional environment; and
         the visual representation of the third user at a third location in the three-dimensional environment, wherein the visual representation of the third user at the third location and the shared user interface at the updated placement location for the shared user interface have the first spatial arrangement relative to each other in the three-dimensional environment.
18. The method of item 17, wherein:
   the shared user interface has a vertical orientation in the three-dimensional environment;
   when the event is detected, a location of the first user is a first respective location in the three-dimensional environment and a viewpoint of the first electronic device at the first respective location is a first viewpoint of the first electronic device; and
   initiating the process to reset the spatial arrangement of the virtual content of the multi-user communication session includes simulating placement of the shared user interface at a location in the three-dimensional environment that is based on the first viewpoint of the first electronic device.
19. The method of item 18, wherein when the event is detected, a location of the second user is a second respective location in the three-dimensional environment, wherein determining the updated placement location for the shared user interface in the three-dimensional environment includes performing an iterative process that includes simulating placement of the shared user interface at a plurality of locations in the three-dimensional environment, including the location in the three-dimensional environment, to determine:
   a first angle between a line extending from the first respective location to a center of the shared user interface and a normal of the shared user interface at each location of the plurality of locations; and
   a second angle between a line extending from the second respective location to the center of the shared user interface and the normal of the shared user interface at each location of the plurality of locations; and
   wherein the updated placement location for the shared user interface in the three-dimensional environment is a location of the plurality of locations.
20. The method of item 19, wherein an angle between a line extending from the second location of the visual representation of the third user to a center of the shared user interface at the first location in three-dimensional environment and the normal of the shared user interface at the first location is a respective angle, and wherein the updated placement location for the shared user interface in the three-dimensional environment is a location of the plurality of locations where the first angle and the second angle are different from the respective angle.
21. The method of any of items 19-20, wherein the plurality of locations includes a first placement location that is a first distance in the three-dimensional environment relative to the viewpoint of the first electronic device and a second placement location, different from the first placement location, that is a second distance, different from the first distance, in the three-dimensional environment relative to the first viewpoint of the first electronic device.
22. The method of any of items 19-21, wherein simulating placement of the shared user interface at each of the plurality of locations includes simulating display of the shared user interface having different orientations about an axis associated with the shared user interface at each of the plurality of locations.
23. The method of any of items 19-22, wherein the plurality of locations includes locations at different lateral positions in the three-dimensional environment relative to the first viewpoint of the first electronic device.
24. The method of any of items 17-23, wherein:
   the shared user interface has a horizontal orientation in the three-dimensional environment;
   the multi-user communication session includes a fourth user of a fourth electronic device who is collocated in the physical environment with the first user and the second user;
   when the event is detected, the fourth user is at a location in the three-dimensional environment that is in between a location of the first user and a location of the second user in the three-dimensional environment; and
   determining the updated placement location for the shared user interface in the three-dimensional environment includes:
      simulating a first bounding box in the three-dimensional environment that extends unto to the location of the first user, the location of the second user, and the location of the fourth user in the three-dimensional environment, wherein the updated placement location for the shared user interface in the three-dimensional environment is based on an aspect ratio of the simulated first bounding box.
25. The method of item 24, wherein:
   in accordance with a determination that the aspect ratio of the simulated first bounding box is a predetermined aspect ratio, the updated placement location is a first respective location that is located inside the simulated first bounding box in the three-dimensional environment; and
   in accordance with a determination that the aspect ratio of the simulated first bounding box is not the predetermined aspect ratio, the updated placement location is a second respective location, different from the first respective location, wherein the second respective location is located outside of the simulated first bounding box.
26. The method of item 25, wherein the second respective location is determined by:
   simulating a second bounding box that extends unto the location of the first user and the location of the second user, and that extends farther than the location of the fourth user in the three-dimensional environment, wherein the aspect ratio of the simulated second bounding object is the predetermined aspect ratio; and
   determining the second respective location based on the simulated second bounding box, wherein the second respective location is located outside of the simulated first bounding object in the three-dimensional environment and is located inside of the simulated second bounding box in the three-dimensional environment.
27. The method of any of items 24-26, wherein:
   when the visual representation of the third user at the second location and the shared user interface at the first location have the first spatial arrangement relative to each other in the three-dimensional environment, the shared user interface at the first location has a first orientation relative to the three-dimensional environment;
   when the visual representation of the third user at the third location and the shared user interface at the updated placement location for the shared user interface location have the first spatial arrangement relative to each other in the three-dimensional environment, the shared user interface at the updated placement location for the shared user interface has a respective orientation relative to the three-dimensional environment that is determined by:
      performing an iterative process that includes simulating display of the shared user interface in a plurality of orientations at the updated placement location for the shared user interface to determine:
         a second spatial arrangement that the first user and the shared user interface have relative to each other in the three-dimensional environment in each orientation of the plurality of orientations at the updated placement location for the shared user interface; and
         a third spatial arrangement that the second user and the shared user interface have relative to each other in the three-dimensional environment in each orientation of the plurality of orientations at the updated placement location for the shared user interface;
      wherein the respective orientation of the shared user interface at the updated placement location for the shared user interface is an orientation of the plurality of orientations where the second spatial arrangement and the third spatial arrangement are different from the first spatial arrangement.
28. The method of any of items 17-27, wherein:
   in accordance with a determination that, when the event is detected, a position of the first electronic device is outside of a field of view of the second electronic device, the updated placement location for the shared user interface in the three-dimensional environment and the third location for the visual representation of the third user in the three-dimensional environment is determined independent of a location of the second user in the three-dimensional environment when the event is detected; and
   in accordance with a determination that, when the event is detected, the position of the first electronic device is within the field of view of the second electronic device, the updated placement location for the shared user interface in the three-dimensional environment and the third location for the visual representation of the third user in the three-dimensional environment is determined based on the location of the second user in the three-dimensional environment when the event is detected.
29. The method of any of items 17-28, wherein:
   presenting the visual representation of the third user at the second location comprises displaying, via the one or more first displays, the visual representation of the third user at the second location in the three-dimensional environment;
   presenting the visual representation of the third user at the updated placement location for the visual representation of the third user comprises displaying, via the one or more first displays, the visual representation of the third user at the updated placement location for the visual representation of the third user in the three-dimensional environment; and
   the method comprises, in response to detecting the event:
      fading out, via the one or more first displays, the visual representation of the third user at the second location; and
      fading in, via the one or more first displays, the visual representation of the third user at the updated placement location for the visual representation of the third user.
30. The method of any of items 17-29, wherein the first electronic device includes a head mounted display system, the second electronic device includes a head mounted display system, and the third electronic device includes a head mounted display system.
31. An electronic device comprising:
   one or more processors; and
   memory, wherein the one or more processors are configured to execute one or more programs stored in the memory, the one or more programs including instructions for performing a method of any of items 17-30.
32. A non-transitory computer readable storage medium storing one or more programs, the one or more programs comprising instructions, which when executed by one or more processors of an electronic device, cause the electronic device to perform a method of any of items 17-30.
33 An electronic device, comprising:
   one or more processors;
   memory; and
   means for performing a method of any of items 17-30.
34. An information processing apparatus for use in an electronic device, the information processing apparatus comprising:
   means for performing a method of any of items 17-30.

## Claims

1. A method comprising:
at a first electronic device in communication with one or more first displays and one or more first input devices:
while a multi-user communication session is established that includes a first user of the first electronic device, a second user of a second electronic device, and a third user of a third electronic device, wherein the first user is collocated with the second user in a physical environment, and wherein the third user is not collocated with the second user and the first user in the physical environment:
presenting, via the one or more first displays, virtual content of the multi-user communication session in a three-dimensional environment, including, concurrently presenting:
a shared user interface at a first location in the three-dimensional environment; and
a visual representation of the third user at a second location, different from the first location, in the three-dimensional environment;
while presenting the virtual content of the multi-user communication session in the three-dimensional environment, detecting an event corresponding to a request to reset a spatial arrangement of the virtual content of the multi-user communication session, wherein the request is initiated based on user input detected at the third electronic device; and
in response to detecting the event, initiating a process to reset the spatial arrangement of the virtual content of the multi-user communication session, including:
maintaining presentation, via the one or more first displays, of the shared user interface at the first location;
determining a spatial arrangement for the first user, the second user, and the shared user interface at the first location when the event is detected; and
based on the determined spatial arrangement for the first user, the second user, and the shared user interface at the first location, presenting, via the one or more first displays, the visual representation of the third user at a respective location in the three-dimensional environment, wherein the respective location is associated with a respective seat of a plurality of seats within a spatial template for the virtual content of the multi-user communication session.

2. The method of claim 1, wherein:
prior to detecting the event:
a location of the visual representation of the third user in the three-dimensional environment is a third location, different from the second location, that is based on a first spatial arrangement for the first user, the second user, and the shared user interface at the first location and is associated with a first seat of the plurality of seats within the spatial template for the virtual content of the multi-user communication session; and
in response to detecting the event, the process includes determining the respective seat of the plurality of seats within the spatial template based on the determined spatial arrangement for the first user, the second user, and the shared user interface at the first location.

3. The method of claim 2, wherein:
in accordance with a determination that a distance between the third location and a location of the first user in the three-dimensional environment is less than a threshold distance or that a distance between the third location and a location of the second user in the three-dimensional environment is less than the threshold distance when the event is detected, the respective seat of the plurality of seats is different from the first seat of the plurality of seats; and
in accordance with a determination that the distance between the third location and the location of the first user in the three-dimensional environment is not less than the threshold distance and that the distance between the third location and the location of the second user in the three-dimensional environment is not less than the threshold distance when the event is detected, the respective seat of the plurality of seats is the first seat of the plurality of seats.

4. The method of any of claims 2-3, wherein the respective location is the third location.

5. The method of any of claims 2-3, wherein the respective location is different from the third location.

6. The method of claim 5, wherein, in an order of seats of the plurality of seats within the spatial template, the respective seat is adjacent to the first seat in the plurality of seats.

7. The method of claim 5, wherein, in accordance with a determination that a plurality of users, including the first user and the second user, in the multi-user communication session that is collocated in the physical environment is within threshold distances of a number of seats of the plurality of seats, including the first seat and seats adjacent to the first seat, respectively, in an order of seats of the plurality of seats within the spatial template, the respective seat is not adjacent to the first seat in the plurality of seats.

8. The method of claim 7, wherein:
in accordance with a determination that the number is a first number in the order of seats of the plurality of seats, the respective seat is a first respective number of seats away from the first seat; and
in accordance with a determination that that the number is a second number, different from the first number, in the order of seats of the plurality of seats, the respective seat is a second respective number, different from the first respective number, of seats away from the first seat.

9. The method of any of claims 1-8, wherein:
presenting the visual representation of the third user at the second location comprises displaying, via the one or more first displays, the visual representation of the third user at the second location in the three-dimensional environment;
presenting the visual representation of the third user at the respective location comprises displaying, via the one or more first displays, the visual representation of the third user at the respective location in the three-dimensional environment; and
the method comprises, in response to detecting the event:
fading out, via the one or more first displays, the visual representation of the third user at the second location; and
fading in, via the one or more first displays, the visual representation of the third user at the respective location.

10. The method of any of claims 1-9, wherein:
when the event is detected, the visual representation of the third user has a first orientation in the three-dimensional environment at the second location relative to a viewpoint of the first electronic device; and
presenting, via the one or more first displays, the visual representation of the third user at the respective location includes presenting the visual representation of the third user having a second orientation, different from the first orientation, relative to the viewpoint of the first electronic device in the three-dimensional environment.

11. The method of any of claims 1-10, wherein the visual representation of the third user is a three-dimensional representation of the third user.

12. The method of any of claims 1-11, wherein the first electronic device includes a head mounted display system, the second electronic device includes a head mounted display system, and the third electronic device includes a head mounted display system.

13. A first electronic device comprising:
one or more processors; and
memory, wherein the one or more processors are configured to execute one or more programs stored in the memory, the one or more programs including instructions for performing a method of any of claims 1-12.

14. A non-transitory computer readable storage medium storing one or more programs, the one or more programs comprising instructions, which when executed by one or more processors of a first electronic device, cause the first electronic device to perform a method of any of claims 1-12.
